# EUROPEAN PATENT SPECIFICATION

(11) **EP 1 381 961 B1**
(45) Date of publication and mention of the grant of the patent: **27.12.2006**
(21) Application number: 02731509.2
(22) Date of filing: 25.04.2002
(51) Int. Cl.: H04N 7/00, G06F 9/44

(54) **SYNCHRONOUS UPDATING OF DYNAMIC INTERACTIVE APPLICATIONS**
SYNCHRONES AKTUALISIEREN DYNAMISCHER INTERAKTIVER ANWENDUNGEN
MISE A JOUR SYNCHRONE D'APPLICATIONS INTERACTIVES DYNAMIQUES

(30) Priority: 25.04.2001 US 843614
(43) Date of publication of application: 21.01.2004
(73) Proprietor: Wink Communications, Inc., San Francisco CA 94111 (US)
(72) Inventor: GEBHARDT, Bryan, C., Fremont, C 94536 (US); AZARM, Houman, Alameda, CA 94611 (US); McCULLOUGH, Charles, N., Oakland, CA 94618s (US); VALDIVIA, Edgard, S., San Francisco, CA 94117 (US)
(74) Representative: Liesegang, Roland
(86) International application number: PCT/US2002/013125
(87) International publication number: WO 2002/086746

(56) References cited:
- EP-A- 1 003 313
- WO-A-99/15968
- US-A- 5 861 881
- US-A- 6 021 433
- US-A- 6 064 438
- THRIFT P ET AL: "JTV - Java-enabled Television" PROCEEDINGS OF THE SPIE, SPIE, BELLINGHAM, VA, US, vol. 3228, 4 November 1997 (1997-11-04), pages 117-122, XP002090497 ISSN: 0277-786X

## Description

### CROSS REFERENCE TO RELATED APPLICATIONS

This application is a continuation-in-part of co-pending application Serial. No. 09/333,724 filed on June 15, 1999. This application is related to co-pending applications Serial Nos. 09/431,001, entitled "Automated Control Of Interactive Application Execution Using Defined Time Periods", filed on November 1, 1999 by Eric E. Del Sesto, Charles N. McCullough, Pat Ransil, and Houman Azarmand, and 09/754,650, entitled "Ensuring Reliable Delivery of Interactive Content," filed on January 3, 2001 by Brian P. Dougherty, Timothy V. Travaille, and Leo C. Meier.

### BACKGROUND

### A. Technical Field

The present invention relates generally to the field of interactive television, and more particularly, to the automatic control of interactivity in synchrony with television broadcast programs.

### B. Background of the Invention

Most interactive television systems attempt to augment existing broadcast programs with viewer selectable interactivity. For example, the interactivity may be broadcast on a special interactive channel that viewer can tune a set top box or other device to receive and present the interactivity. This interactivity is typically provided with a user interface that occupies the entire television screen. In this fashion, the viewer chooses either to watch conventional broadcast programs on the regular channels, or to use the interactivity on an interactive channel. In other implementations, the interactivity may be activated on any channel, but still takes up the entire television screen. However, these implementations of interactive television typically do not require the interactivity to be synchronous with some broadcast program that is being broadcast, since the interactivity overrides the entire screen, thus blocking presentation of the broadcast program. Broadcast programs include television shows, commercials, programming guides, and like.

Another version of interactive television is intended to be displayed only a portion of the television screen, and to provide interactivity that accompanies a broadcast program. For example, a broadcast game show may be accompanied by interactivity that allows the viewer to play along and input answers to questions being posed during the show. This interactivity is displayed on only a portion of the television screen, so as to allow the viewer to continue to watch the broadcast program.

For interactivity that accompanies a broadcast program, it is desirable to maintain the interactivity in synchrony with the broadcast program. This means that the interactivity should be available to the viewer whenever the broadcast program that it accompanies is being broadcast, and that any state information that the viewer has created, e.g. an accumulated point total in a game, should be maintained, even if the broadcast program is temporarily suspended and then resumed, for example, during a commercial break.

It further means that the interactivity should *not* be displayed when the accompanying broadcast program is not being broadcast or is otherwise interrupted. In particular, proper synchrony requires that the interactivity for a television show not be displayed when a commercial is broadcast during the show. This is for two reasons. First, the commercial may have its own interactivity accompanying it, such as a form for the user to request product information about a product advertised during the commercial. Thus, the commercial's interactivity must be displayed, and yet the show's interactivity must be redisplayed when the commercial (or series of commercials) is over and the television show is resumed. Redisplay of the show's interactivity should be prompt and as noted, should preserve the state information that was available when the commercial began. For example, if the viewer was accumulating points in an interactive game, then the accumulated points should be available when the show's interactivity is resumed.

Second, even if the commercial(s) does not have its own interactivity, it is inappropriate to display the interactivity of the show during the commercial. This is because the interactivity will override a portion of the television screen, thereby covering up part of the commercial, which is unacceptable to the advertiser that paid for the commercial to be broadcast. Also, the interactivity for the show is not associated with the commercial, and its appearance may confuse the viewer.

Accordingly, it is desirable to provide an interactive television system, method, and software products that correctly synchronize the interactivity of various broadcast programs, and accommodate the interruption of broadcast programs by other broadcast programs.

Apart from interactive television systems, conventional television broadcast systems provide various degrees of automated and manual control over how the broadcast programs are selected and output for broadcast transmission. A conventional broadcast system typically includes a broadcast scheduling system, various broadcast sources, a data insertion unit, and a transmitter. The broadcast sources provide the video, audio, or other content that is broadcast via the transmitter. These broadcast sources may be various types of video and audio tape decks, video tape libraries, digital audio/video sources, live video sources, server computers, and the like.

The scheduling system generally controls broadcast sources in a broadcast system with sequences of native control signals. These control signals instruct various ones of the broadcast sources to start, stop, load or otherwise manage their broadcast programs. The sequence of control signals is determined mainly by a playlist that identifies which broadcast source to activate or deactivate at which times, and the channel assignments to which an active broadcast source is to be routed. In a manual control system, the control signals are generated in response to manual operations of human operators to selectively activate or deactivate any of the broadcast sources, and assign the output to the appropriate channel.

The broadcast data from the broadcast source is passed to the transmitter. The transmitter transmits the broadcast signal on a selected channel to any number of broadcast receivers. A broadcast receiver, such as a set top box or compatible television, tuned to the selected channel receives the broadcast signal and displays a broadcast program.

Conventional scheduling systems and manual controls generally provide their output control signals only to the broadcast sources or similar devices. This is because these control signals are in a format specific to the broadcast sources, and not designed to control other types of broadcast equipment. For example, scheduling systems that control video sources use control signals that are meaningful to the video source devices. Accordingly, it is desirable to provide a system and method that uses existing control signals from scheduling systems to further facilitate the automated control of synchronous interactivity with broadcast programs. This is desirable to avoid requiring modification of the scheduling system to operate with new automation enabled equipment.

Some broadcasts insert into the broadcast signal codes that identify the broadcast program or its type, for example, as a television show or as a commercial. One commonly used sets of codes are the Industry Standard Coding Identification system ("ISCI codes") of the American Association of Advertising Agencies Inc. ISCI codes are normally used to indicate sponsorship or affiliation of a commercial broadcast. However, these codes are not currently used to control the execution of interactivity that may be associated with a television show, commercial, or other broadcast program. Accordingly, it is desirable to a provide a system and method that uses these and similar embedded codes in the broadcast signal to control the synchronization of the interactivity of various broadcast programs.

One system of interactive television cooperates with the conventional broadcast system, such as described above, to provide useful interactivity. Such a system includes a broadcast server that stores a database of interactive applications. The interactive applications are selectively associated with various broadcast programs, in order to accompany such programs as they are being broadcast. The broadcast server typically receives its own playlist for a given broadcast period, and uses scheduling information therein to identify particular broadcast programs being currently broadcast. The broadcast server retrieves the interactive application(s) associated with the currently broadcast program(s), and provides these interactive applications to a data insertion unit. The data insertion unit combines the data from the interactive applications with the broadcast data from the broadcast sources to create the broadcast signal, in which the broadcast program is now accompanied by its interactive application. The combined broadcast signal is transmitted by the transmitter on a selected channel. Any of the broadcast receivers tuned to the channel receive the broadcast signal containing both the broadcast program and the accompanying interactive application. The broadcast receiver displays the broadcast program, and decodes and executes the interactive application, displaying it as appropriate on the television screen. The broadcaster server is further capable of sending commands to the broadcast receiver to selectively start, stop, suspend, or resume the execution of some interactive application in accordance with predefined instructions in the playlist.

However, the broadcaster server has previously not been integrated with existing scheduling systems to automate the control of interactive applications based on control signals from the scheduling system. One of difficulties in this regard is the lack of uniformity, and the variety, of, control signals that various types of scheduling systems use to control their broadcast sources, which as noted above, are designed to interface with broadcast sources. Nor has this system previously been responsive to ISCI codes or the like to control interactivity. Accordingly it is desirable to provide synchronous interactive applications through an effective interface between the scheduling systems and the broadcast server.

Another problem with existing scheduling systems and broadcast servers is a lack of flexibility in handling partial changes in the contents of interactive applications. In some instances, it is desirable to make only selected changes to the content of an application, instead of replacing the entire application itself. For example, a stock ticker application needs ongoing feeds of updates stock quote records; as another example, a nightly news interactive application may need updates to just those portions related to current news headlines, or an interactive application for a variety show may need updates to just those portions describing the current schedule of guests. Existing systems have been limited thus far to making these changes in the interactive application at its broadcast source, by integrating the changed information with the interactive content prior to generating the broadcast signal. However, this approach does not allow a local broadcast system, such as a cable headend, to insert locally relevant information or updates at its downstream location. Further, in systems where a local broadcast server can replace the interactive application identified in a received broadcast signal with a customized version of the interactive application (e.g., a version with higher quality graphics), then is also desirable to forward updates from the broadcast signal to the customized application for integration of the updates with the application.

WO 99/15968 discloses a television distribution network for enabling a user to download internet web pages related to a currently viewed television broadcast via channel hyperlinking. A user sends channel hyperlink requests through an upstream channel to a network headend by actuating a web button on a remote controller. The headend is interfaced to an Internet Service Provider for downloading related web pages. The headend uses an ID tag with channel and time of request information to identify the location of the information to be downloaded to the user. A browser application constructs the accessed information into a bitmap which is preferably compressed. The compressed bitmap is then forwarded by the browser application to a terminal display manager. Preferably, the terminal display manager is designed to minimize further the actual amount of information that must be transmitted to the set top converter box. This is accomplished by transmitting to the set top converter box only the information necessary to refresh portions of a display screen that are to be changed.

The article "JTV-Java-enabled Television" by P. Thrift et al., Proceedings of the SPIE, SPIE, Bellingham, VA, US, vol. 3228, November 4, 1997, pp. 117-122 discloses the JTV API. This API enables programmers to develop and distribute interactive applications and applets that combine Java with both, enhanced broadcast and interactive television content.

European Patent Application EP 1 003 313 A1 discloses a method of delivering an interactive application to a plurality of target platforms.

### SUMMARY OF THE INVENTION

The present invention provides for automated control of interactivity to maintain synchronous display of interactivity with their respective broadcast programs, regardless of the interruption of a broadcast program and its interactivity by other broadcast programs and/or interactivity.

In accordance with one embodiment of the present invention, control signals that normally are used only to control the broadcast sources (or similar devices such as subtitlers), are received and processed to output commands to a broadcast server. These commands selectively instruct the broadcast server to control the execution of interactivity on a broadcast receiver. The broadcast server in turn transmits commands to the broadcast receiver, which executes the commands to control the interactivity.

The control signals used by the present invention may come from a variety of sources, such as from a conventional broadcast scheduling system operating in automatic or manual modes, or from pre-recorded sources that encode the signals in conjunction with the broadcast programs, as on video tape.

As noted above, the control signals are typically formatted specifically to control the broadcast sources, such as specific types of video, audio, or other output devices. In addition, the control signals merely control the broadcast of these sources, and have no direct or inherent relationship to the execution of the interactivity. Accordingly, the present invention translates the control signals into commands that are acceptable to the broadcast server to selectively control the execution of the interactivity.

The present invention may also use state information from the broadcast server to determine the current state of execution of an interactivity on various ones of the broadcast receivers; this state information allows for different commands to be generated in response to the otherwise opaque control signals from the scheduling system.

The present invention provides for automated synchronous control of interactivity for a variety of different types of broadcast scheduling systems. In general, the various types of scheduling systems provide different amounts and types of information in their control signals.

Certain basic scheduling systems merely provide a control signal indicating to start, stop, or prepare a broadcast program, which signal may sometimes include a broadcast program ID for the program. For this type of scheduling system, identification of the broadcast program *(e.g.* a television show or a commercial) is used to determine if there is an accompanying interactive application for the broadcast program; timing information is used to determine if the interactive application should be started, stopped, suspended, or resumed. Appropriate commands and data are provided to the broadcast server to selectively control broadcast of the interactive application.

Another type of scheduling system provides control signals that can be used to identify the commercial programs that are being broadcast during a television show, but otherwise does not identify the television programs themselves. The present invention uses this information to identify the interactivity associated with the commercial, and thus, to provide commands to the broadcast server to effect the broadcast of the identified interactivity, along with commands to selectively suspend and resume interactivity that may be accompanying the television show in which the commercial aired.

Yet another type of scheduling system provides control signals which identify the broadcast program along with its duration. In this case, the present invention is capable of selectively suspending and resuming the appropriate interactivity for a broadcast program and intervening commercials.

In one embodiment, the present invention provides an automation server that interfaces between existing, conventional broadcast scheduling systems and a server of interactive applications (and other forms of interactivity), to selectively control the execution of the interactivity that may accompany broadcast programs in response to control signals output by the scheduling system.

In accordance with the present invention, the automation server further interfaces with the broadcast server to provide commands to the broadcast server to selectively start, cancel, suspend, or resume execution of an interactive application. Using the control signals from the scheduling system, the automation server determines which broadcast programs are being broadcast, and creates and maintains state information about the state of each broadcast program. Using information identifying the broadcast programs and their associated interactivity (if any), the automation server also maintains state information about the state of each interactive application. Using this state information and the control signals from the scheduling system, the automation server determines the appropriate commands to send to the broadcast server to maintain synchrony between the broadcast programs and the interactive applications.

This synchronous behavior results in an interactivity being displayed at the times that its associated broadcast program is displayed, and not shown during other times. For example, the present invention provides the proper synchronous display of interactive applications for television shows which are segmented by one or more commercial breaks (each of which may have multiple commercials, and which commercials may have their own interactivity). The present invention detects when a commercial break has occurred during the broadcast or a television show from the control signals of the scheduling system. The present invention may then suspends (stops) execution of the interactivity of the television program, without canceling the interactivity until such time as it can be safely determined that there are no further segments of the same television show after the commercial break has ended. During the commercial break, the appropriate interactivity for the commercial(s) is executed. If the television show is resumed, that is another segment of the television show is aired, the present invention detects that the prior segment and the current segment are related, and restarts the suspended interactivity, restoring any state information (e.g., current game points, form data, etc.) that may have been created before the commercial break. If the television show is not resumed after the commercial break and a new television show is broadcast, again the present invention detects this change in broadcast program, and terminates the interactivity for the prior television show and starts the interactivity for the next television show.

In one embodiment of the present invention, the automation server includes a plurality of channel interfaces, each of which receives and manages the control signals for a specific channel. Each channel interface includes a translator module and an event manager. The translator module translates the native control signals from the scheduling system pertaining to broadcast programs on the channel into a fixed set of atomic commands. The translator also maintains state information about the lifecycle of each broadcast program. The event manager receives the atomic commands and processes them into commands to the broadcast server to control the interactivity of the broadcast programs. The event manager maintains state information about the lifecycle of interactive applications on the channel, and from this state information, generates the appropriate commands to the broadcast server. The use of a separate translator and event manager allows the present invention to easily interface with different scheduling system by use of different translators, while preserving the same event manager. In addition, the separation of the translator module and the event manager enables the automation server to potentially interface with different types of broadcast servers by creating new types of event managers, without requiring changes to the translator module. This feature allows the automation server to cooperate with interactivity defined in various standards that may be developed in the future.

In the context of the present invention, interactivity may be provided by any form of interactive application, such as those that are transmitted in the same signal as the broadcast programs and executed by the broadcast receiver or other end-user device that receives the broadcast signal, or interactive applications executed at a cable head end or other broadcast source, interactive applications executing on a conventional computer and broadcast over the Internet or other networks in synchrony with broadcast programs, or that are provided asynchronously from the broadcast program and executed as needed.

In another embodiment, the present invention detects updated records of an interactive application in the broadcast signal and selectively provides these updates to the broadcast server. This allows the broadcast server to broadcast these updates to broadcast receivers which are receiving the application, and integrate such updates into the application. One embodiment of this system includes an update manager having a code reader and a code detector. The code detector detects the presence, absence, or change of application identification codes in the broadcast signal, and signals a translator module (or event manager) in the automation server accordingly. The code reader extracts the updated records from the broadcast signal. The event manager signals the code reader to start or stop providing the updated records to the broadcast server. This allows the local system having the broadcast server to extract updates from the broadcast signal and integrate those updates into the local version of the application, thereby combining both the updates from the remote broadcaster (e.g., a network broadcaster) with locally relevant or customized applications (e.g. higher bandwidth digital applications).

The automation server of the present invention may be embodied as a software product, or as a part of a larger system or apparatuses including special purpose hardware and software. The present invention may also be practiced as various methods of controlling the execution of interactivity associated with broadcast programs.

### BRIEF DESCRIPTION OF THE DRAWINGS

Fig. 1 is an illustration of a system in accordance with the present invention.
Fig. 2 is an illustration of a broadcast receiver.
Fig. 3 is a flowchart of the overall process of receiving and executing interactive applications.
Fig. 4 is an illustration of the automation server in an embodiment of the present invention.
Fig. 5 is an illustration of a channel interface, including a translator module and event manager.
Fig. 6 is a lifecycle diagram of the interface manager.
Fig. 7 is a lifecycle diagram of a channel interface, including its translator module and event manager.
Fig. 8 is a state machine diagram for an ideal translator.
Fig. 9 is a flowchart of the translator module's mapping logic.
Fig. 10 is a flowchart of the event manager's mapping logic.
Fig. 11 is a state machine diagram of the event manager.
Fig. 12 is an event trace showing the segmentation of a broadcast program's interactivity with respect to commercials.
Fig. 13 is an illustration of a system that provides updates to dynamic interactive applications.

### DETAILED DESCRIPTION OF THE PREFERRED EMBODIMENTS

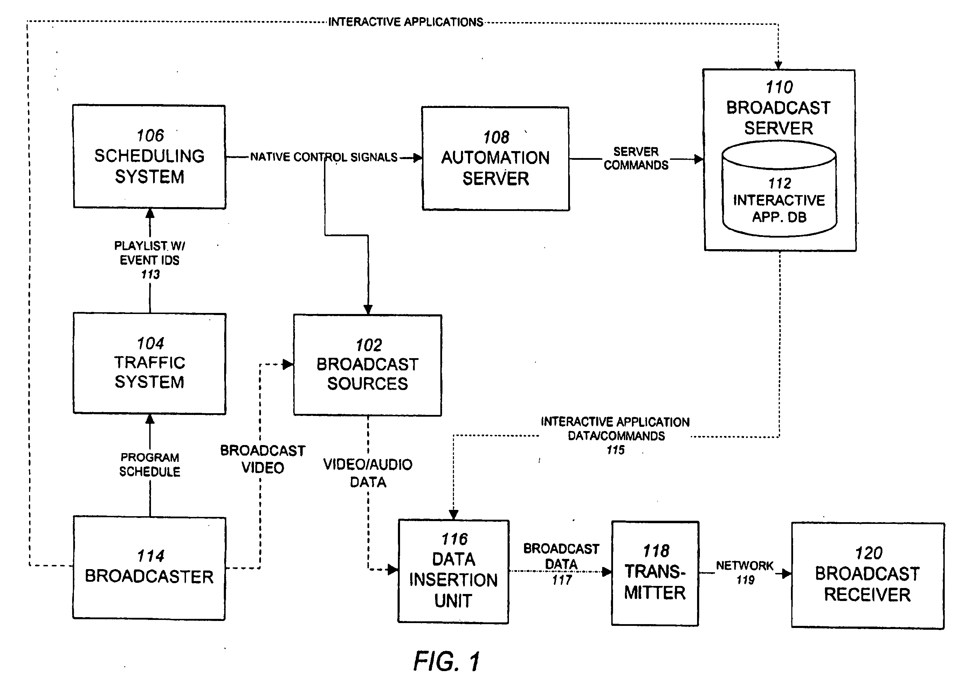

Referring now to Fig. 1, there is shown an illustration of a system in accordance with the present invention. It will be appreciated that the system illustrated in Fig. 1 may be incorporated in to larger, more complex systems while still providing the features and benefits of the invention.

### A. System Overview

Generally, system **100** includes a scheduling system **106,** an automation server **108,** a broadcast server **110,** a traffic system **104,** broadcast program sources **102,** a data insertion unit **116,** and a transmitter **118.** These elements are typically used in an embodiment used by a cable operator at a cable head end. Implementation of the present invention in other installations is certainly feasible. Broadcast receivers (BR) **120** are remotely distributed in viewers' homes, offices, and the like. The person or persons receiving the programs are referred to as "subscribers" or "viewers."

The system **100** cooperates with multiple broadcasters **114.** A broadcaster **114** provides program material to be broadcast to the BRs **120.** As used herein, a "broadcaster" **114** is any entity providing a program that will be carried on a broadcast signal. A "program" is a discrete segment of a broadcast. Thus, as defined herein, programs include television shows, commercials, public service announcements, pay-per-view events, and the like. Broadcasters include television networks, as well as advertisers who prepare commercials, pay-per-view providers, cable networks, and the like.

A broadcaster **114** provides broadcast video data including as necessary audio and other data to various broadcast program sources **102,** such as banks of video cassette players, video laserdisc players, subtitlers, video servers, character generators, audio cart machines, still stores, digital effects systems, live studio feeds, live remote field feeds (e.g. from cameras at a live sporting event), and the like that contain or generate program material. The broadcast video data is stored in the broadcast program sources **102** until needed for broadcast. Suitable broadcast program sources include the TCS45 Automated Video Library from Odetics, Inc. of Anaheim, California, and the MediaStream Server from Hewlett-Packard of Palo Alto, California, and similar devices or systems.

A traffic system **104** receives a program schedule from the broadcaster **114.** The program schedule defines which programs provided by the broadcaster **114** are to be broadcast on which channels at which times. Depending on the broadcaster **114,** commercial programs may be included in the program schedule, or slots in the schedule may be provided for insertion of commercials provided by other broadcasters **114.** The traffic system **104** integrates the program schedules from the many different broadcasters, along with broadcast scheduling information that is locally generated, *e.g.*, by the cable operator, to produce a playlist **113.** A suitable traffic system **104** is the Columbine JDS from Columbine JDS Systems, Inc.

In one embodiment, this playlist **113** is prepared in advance of the broadcasts and identifies the programs that will be broadcast at particular times. Preferably the playlist **113** contains sufficient information to identify each program, its start and end times, the channel and network assignments. In addition, for each program at a particular time, there may be information identifying the particular broadcast program source **102** that is to output the Program.

The scheduling system **106** may include manual or automated control components or both, and suitable switching apparatuses. The scheduling system **106** further receives the playlist **113** describing which broadcast programs are to be broadcast at which times, and using which the broadcast program sources **102.** Via its manual and/or automated components, the scheduling system **106** couples the broadcast program sources to respective broadcast media for controlling which program sources output to which broadcast mediums at any given time. More particularly, the scheduling system **106** outputs native control signals which are formatted for, and typically meaningful only to, the various ones of the broadcast program sources **102.** The types and complexity of the automated and manual components varies, and thus so do the types of control signals they provide. The manual component of the scheduling system **106** is used by an operator to manually select and activate the broadcast program sources **102** as needed, and generate the corresponding control signals which are likewise received by the automation server **108.**

Yet another source of control signals to the automation server **108** includes pre-recorded control signals that are included with broadcast data on the broadcast sources **102.** Thus, control signals appropriate to a particular broadcast program can be pregenerated and stored on a video tape of the broadcast program at the appropriate times. Storage of the control signals in this manner can be on any media which stores the broadcast programs. Alternatively, the control signals may be pre-recorded and stored on media separate from their broadcast programs, but played out in conjunction with them. Alternatively, the control signals may be embedded in real time into the broadcast data, for example using a VITC time code generator, or a NORPAK data insertion unit.

In addition, the methodology of obtaining the control signals may be done by either push from the scheduling system **106** or by polling the scheduling system **106**

The broadcast server **110** is preferably a computer system executing one or more software programs providing the functionality described herein. A suitable broadcast server is the Wink Broadcast Server, from Wink Communications, Inc. of Alameda, California. The broadcast server **110** contains an interactive application database **112.** The interactive application database **112** stores interactive applications or other forms of interactivity that will be broadcast to various remotely distributed BRs **120.** Interactive applications and other forms of interactive content may be added to the interactive applications database **112** by a broadcaster **114** or other program supplier and may be transmitted to the database **112** by a secure network link or other transmission media. Fields within the database **112** associate interactive applications with, for example, a particular broadcaster, network, channel, program, and/or broadcast time. In addition, each interactive application in the database **112** preferably has a unique interactive application identification code by which it may be identified. Association of the interactive application identification code with the program identification code (such as used by the broadcast sources), enables the broadcast server **112** to selectively retrieve an interactive application in response to receiving a program identification code. For ease of reference, the term "interactive application" covers all forms of interactivity for broadcast programs that are described herein or equivalent to those disclosed.

In one embodiment of the present invention, the interactive applications stored in the database **112** are described by a compact communications protocol. The compact protocol is designed to broadcast a compact set of information and commands among the system components in an efficient manner, thereby allowing the use of low bandwidth transports such as the vertical blanking interval ("VBI"). While a preferred embodiment of the present invention uses the compact protocol described herein, interactive applications may be described by other protocols, including for example, the Hypertext Markup Language ("HTML"), Extended Markup Language ("XML"), SUN MICROSYSTEMS INC.'s JAVA language, or the HTML-based interactive television protocol ATVEF. A detailed description of one compact protocol suitable for interactive applications, including supported definitions, scripts, and commands, is described in U.S. Pat. No. 5,689,799, entitled "Method and Apparatus for Routing Confidential Information,".

The interactive applications are themselves software products comprising executable code and data, which configures and controls the operation of a broadcast receiver 120, as further described below.

There may be a plurality of broadcast servers **110,** with each broadcast server 110 serving a particular geographic area, set of broadcasters, or set of subscribers. In one embodiment, each broadcast server **110** is identified by a unique server identification code.

Generally, the broadcast server **110** determines which interactive applications should be broadcast on a particular channel at a particular time, retrieves the interactive applications corresponding to the particular channel and time or program identification code from the database **112,** and prepares the interactive applications for broadcast.

To determine which interactive applications are broadcast at the various times, channels, and so forth, the broadcast server **110** receives the playlist **113** of programs to be broadcast from the traffic system **104.** The broadcast server **110** uses this information to identify and retrieve a corresponding interactive application (if any) from the database **112** that is to accompany each broadcast program. The broadcast server **110** further outputs commands, which are broadcast to the BRs **120** instructing to them start, stop, cancel, suspend, or resume interactive applications that may be received or already received and resident in memory in the BRs **120.**

The broadcast server **110** formats a retrieved interactive application, if necessary, and otherwise prepares it for insertion into a broadcast signal. Using the playlist **113** received from the broadcaster **114,** the broadcast server **110** passes the interactive application 115 and/or various commands, to the data insertion unit ("DIU") **116** to incorporate the interactive application **115** into the broadcast data **117** concurrent with the broadcast of the program.

The DIU **116** receives the interactive application 115 or commands from the broadcast server **110** and the broadcast signal, or feed, carrying the program corresponding to the interactive application **115.** The broadcast feed may be received from the broadcast program sources, the broadcaster **114** directly, or, in the case where the broadcaster does not provide the feed, from a third party such as a network, cable operator, or local television station. The DIU **116** converts the interactive application **115** and commands into a format suitable for insertion into the broadcaster feed and transmission therewith as broadcast data **117.** The DIU **116** may receive feeds from multiple broadcasters and can insert a separate interactive application into each feed. Likewise, the DIU **116** can simultaneously insert a separate interactive application into multiple channels from the same, or different, broadcasters **114.**

The DIU **116** inserts the broadcast data **117** containing the interactive applications, commands, and broadcast programs into the broadcast medium. The broadcast medium is the frequency spectrum used to carry the interactive application **115.** In one embodiment, the broadcast medium is a standard analog television signal following National Television Standards Committee ("NTSC") standards and the VBI is used as a transport to broadcast the interactive application. The transport is the specific portion of the broadcast medium which carries the interactive application **115.** In another embodiment, the broadcast medium is a standard MPEG2 Digital Video Multiplex, containing one or more MPEG2 Video Services, and a MPEG2 elementary stream (or streams) within this multiplex is used as a transport. DUI **116** may operate with analog or digital video sources, and alternatively, may operate as an interface to a wide area network that connects the broadcaster **114** or broadcast sources **102** directly to various transmitters **118.**

In one embodiment, the DIU **116** uses conventional methods to insert data defining an interactive application into the VBI of the broadcast feed. The North American Broadcast Teletext Standard (EIA-506) defines the methods and protocols for sending data in one or more lines of the VBI. However, a wide variety of other transport mechanisms are available, including those that broadcast the interactive application **115** separately from the television program. Such transport mechanisms include out-of-band transmitters, which transmit the interactive application **115** on an unused portion of the television frequency spectrum, and conventional frequency modulation ("FM") radio transmitters, which transmit the interactive application **115** outside the television frequency spectrum. In another embodiment, the DIU uses conventional methods to insert data into an elementary stream within a MPEG2 multiplex.

In one embodiment, error checking or error correcting codes such as Hamming codes are inserted with the data. In one embodiment, the DIU **116** translates the data into a Hamming code, and in another embodiment, the data received by the DIU **116** from the broadcast server **110** is already encoded.

The DIU **116** is coupled to a transmitter **118** for transmitting the broadcast feed, including any inserted interactive applications or commands from the broadcast server **110.** In one embodiment, the transmitter **118** is a satellite uplink transmitting the feed to local uplink receivers which then distribute the feed to the BRs **120** via cable. In another embodiment, the transmitter **118** is a conventional cable system head-end amplifier. In yet other embodiments, the transmitter **118** is a conventional television broadcast transmitter or a high-definition television digital transmitter. Still in other embodiments, the transmitter **118** may transmit the broadcast data over a WAN connection, the Internet, or other public/private networks.

In another embodiment, the DIU **116** inserts the interactive application **115** into the program before the program is broadcast. For example, the DIU **116** may insert an interactive application into the source copy of a television commercial. Accordingly, the interactive application is broadcast whenever the commercial is broadcast. In this embodiment, the broadcast server **110** does not need to synchronize the retrieval of the interactive application with the schedule listed in the playlist. However, the automation server **108** will still be used to control synchronization of the operation of such a broadcast interactive application during broadcast of the commercial and of any interactive applications being broadcast during the television program in which the commercial is aired.

Regardless of transmission method and insertion time, the broadcast data **117,** including the interactive application, is received by a subscriber's BR **120.** Although only a single BR **120** is illustrated in Fig. 1, it is understood that in a typical embodiment there are hundreds or thousands of BRs **120** receiving the broadcast data **117** and responding as described herein. In a typical embodiment, the BR **120** is a television set-top box receiving the data **117** via a coaxial cable. Additionally, the BR **120** may be integrated into the television. Moreover, other broadcast receivers, including an NTSC broadcast receiver, a high-definition television digital receiver, a video cassette recorder, or an FM radio receiver can also be used.

The above architecture supports a number of useful embodiments, in which the automation server **108** controls broadcast server **110** to transmit various types and formats of data to achieve synchronous behavior with broadcast programs. First, it should be noted that the broadcast server **110** may also serve other types of data, separate from or in addition to interactive applications. For example, the broadcast server may serve data such as computer programs or audio/video data. The broadcast server may also provide data, forms, codes, or triggers to interactive applications previously transmitted to the broadcast receivers.

These various types of data may be transmitted in accordance with the present invention in response to commands from the automation server **108.** For example, the broadcast server may send out an interactive application to a broadcast receiver well ahead of the time at which the interactive application and its associated broadcast program is to appear. Then in response to commands from the automation server **108,** the broadcast server **110** may send out trigger codes which trigger the execution of the previously loaded interactive application so that it executes in synchrony with the broadcast program. Likewise, in response to the automation server **108,** the broadcast server **110** may transmit forms or other data to update or modify the features, user interface, or functionality of an interactive application that is already resident at the broadcast receiver. This allows the automation server **108** to manipulate or change the interactive application in response to control signals from the scheduling system **106.**

The broadcast server **110** may also serve hypermedia data, such as text, graphics, images, uniform resource locators (URLs), uniform resource identifiers (URIs), HTML, XML, ATVEF, JAVA applets, or other types or formats of data, again in response to commands from the automation server **108.** For example, in response to the scheduling system **106** providing control signals indicating the start of a television show, the automation server **108** may instruct the broadcast server **110** to transmit a URL to a web site or page to the broadcast receiver, which in turn loads the web site for display to the user, for synchronous display of the web site with the television show.

For any of these or other types of data which may be served by the broadcast server **110** in response to commands from the automation server **108,** the interactive application database or its analogue stores the data in association with program identifiers for the broadcast programs. This allows the automation server **108** to determine the appropriate data to be served given the program identifier from the control signals of the scheduling system **106.**

### B. Broadcast Receiver

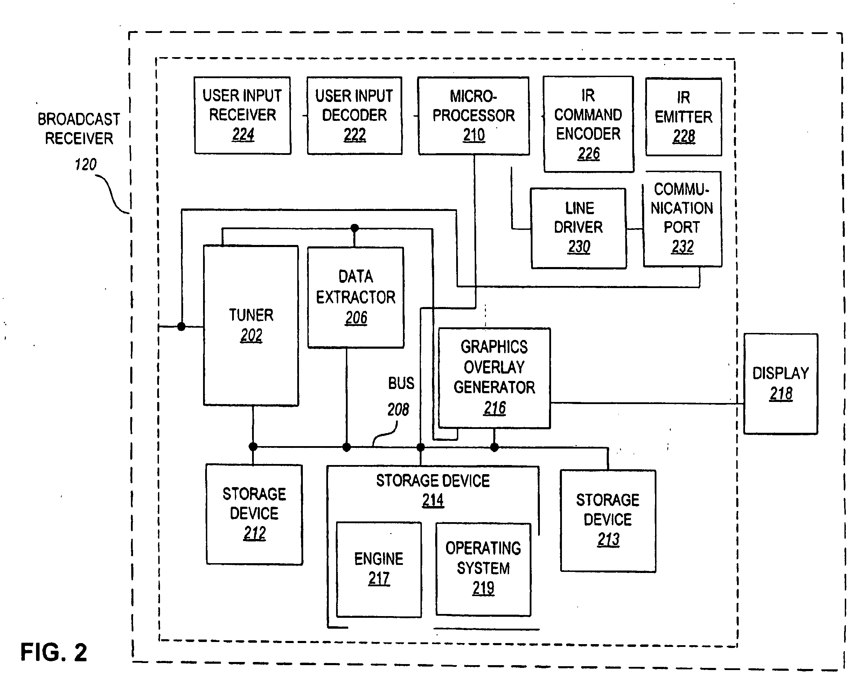

Fig. 2 illustrates an embodiment of the BR **120** according to an embodiment of the present invention. In one embodiment, the BR **120** is the General Instrument CFT-2200 CATV set-top decoder. The BR **120** includes a tuner **202** for receiving the broadcast data **117** from the transmitter **118.** In one embodiment, the tuner **202** is a conventional cable television tuner. In other embodiments, the tuner is a television broadcast tuner, a FM radio tuner, a digital tuner, or some other form of tuner. In yet another embodiment, a personal computer with the appropriate hardware and software may function to display broadcast programs received over various types of transmission channels, including cable, the Internet, and satellite. The embodiment illustrated in Fig. 2 shows a display **218,** typically a television, within the BR **120.** As mentioned above, the display **218** may also be located external to the BR**120.**

The BR **120** also includes a data extractor **206** coupled to the tuner **202** for extracting the interactive application from the broadcast data **117.** In one embodiment, the data extractor **206** is a conventional VBI inband data extraction circuit. In another embodiment, the data extractor **206** is a conventional modem. The data extractor **206** provides a serial bitstream containing the extracted interactive application onto a bus **208.** The bus **208** is coupled to a microprocessor **210** which stores, via the bus **208,** the extracted interactive application into a first storage device **212** as instructed by a program stored in a second storage device **214.** In one embodiment, the microprocessor **210** uses the error code information from the extracted data to check or correct errors in the decoded interactive application. In one embodiment, the first storage device **212** is a conventional random access memory ("RAM") while the second storage device **214** is a conventional read-only memory ("ROM"). A third storage device **213,** which may be RAM or flash memory, is coupled to the microprocessor **210** to store reminder data. An advantage of flash memory is that software or data resident in the BR**120** can be modified by a received interactive application.

In one embodiment, the BR **120** also uses the data extractor **206** to extract a time signal from the broadcast data **117.** The time signal indicates the current time using a standard timebase, such as Coordinated Universal Time ("UTC") or the subscriber's local time. In another embodiment, the BR **120** has a real-time clock that is either set by the subscriber or the received time signal. Regardless, the BR **120** preferably has access to the current time and, accordingly, can perform date stamping and timing functions.

As described below, the microprocessor **210** uses the program stored in the second storage device **214** and the interactive application stored in the first storage device **212** to execute the interactive application and provide an output. The program stored in the second storage device **214** is preferably an execution engine **217** for executing an interactive application defined by various scripts, forms, definitions, and code and graphic resources. A preferred execution engine is the Wink Engine provided by Wink Communications, Inc. of Alameda, California. The broadcast receiver **120** includes either as part of the execution engine **217,** or the native operating system **219** also stored in the second storage device **214,** timer functions that can be run as background processes to countdown from an input value, or equivalent timing specification.

The output from executing an interactive application may be, for example, a form presenting information or a menu to a television viewer or for receiving viewer input, or it may be a response, silent or otherwise, containing BR **120** or television usage data or indicating viewer preferences. For purposes of the present invention, the forms may present any variety of information, and take any variety of user responses. To this end, the BR **120** preferably includes a graphics overlay generator **216** coupled to the bus **208** and driven by the interactive application **115** stored in the first storage device **212** and the program stored in the second storage device **214.** The graphics overlay generator **216** generates a graphical display responsive to the interactive application **115.** This graphical display is displayed on a display **218,** typically a television, coupled to the BR **120.** Of course, the graphics overlay generator **216** is typically not used when an interactive application silently executes.

In one embodiment, the graphics overlay generator **216** also receives the broadcast signal corresponding to a broadcast program from the tuner **202** to allow simultaneous display of the broadcast program and the graphical aspects, if any, of the interactive application **115,** for example, to input data into a displayed form. In one embodiment, the microprocessor **210** is also coupled to a user input decoder **222** coupled to a user input receiver **224** to allow the user to communicate with the microprocessor **210** in order to respond to the interactive application **115.** In one embodiment, the user input decoder **222** is a conventional infrared remote control decoder. The user input receiver **224** is preferably a conventional infrared receiver **224** with which the user may use a conventional hand-held remote control device. Remote control keys pressed by the user translate to coded infrared signals that are received by the user input receiver **224,** are decoded by the user input decoder **222,** and sent to the microprocessor **210** to allow the user to communicate with the interactive application **115.**

In one embodiment, the BR **120** is a cable TV set-top decoder, connected to a cable system via a broadband coax cable. In this embodiment, line driver **230** is an RF modem which is capable of sending responses via the coax cable to the cable system head-end, typically using an out-of-band portion of the RF spectrum, and communications port **232** is a standard RF tap. In another embodiment, the BR **120** is a television, VCR, or set-top in which line driver **230** is a standard telephone modem and communications port **232** is a standard RJ-11 jack.

The microprocessor **210** may also be coupled to a conventional infrared command encoder **226,** which accepts an infrared command input and encodes a signal for a conventional infrared emitter **228** to allow the interactive application **115** to control external devices.

### C. Interactive Application Execution

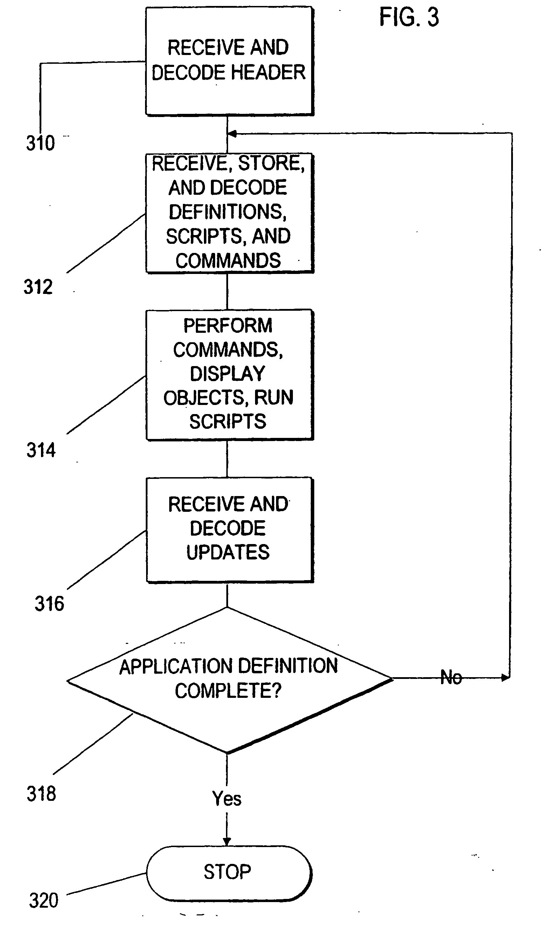

Fig. 3 is a flowchart illustrating steps for receiving and executing an interactive application using the compact information protocol according to a preferred embodiment of the present invention. The BR **120** receives and decodes **310** an application header record prepared by the broadcast server **110,** inserted by the DIU **116,** and transmitted by the transmitter **118.** The application header record describes the information that follows and contains the interactive application identification code.

The reminder functionality of the interactive application is described by definitions, scripts, and commands which may be encoded and broadcast in any order. The definitions, scripts, and commands are received and decoded **312** by the BR **120** and define the reminder and response parameters used when executing **314** the reminder interactive application.

Some or all of the received reminder interactive application may be stored **312** within the BR **120.** In one embodiment, the interactive application is repeatedly broadcast, allowing a BR **120** to tune to a program at any time yet receive the entire interactive application. Any desired updates to the stored interactive application may be received and decoded **316.** If there are additional or updated definitions, scripts, or commands, they may be sent until the application is complete **318.** In one embodiment, a termination command may be broadcast to stop **320** the interactive application.

A new interactive application may be sent at any time, including while an original application is executing or transmitting a response. For example, a new interactive application corresponding to a commercial may interrupt an original application corresponding to a news program, and the present invention enables the latter application to resume operation upon termination of the former.

In other embodiments using different forms of interactivity, such as URLs, the broadcast receiver **120** provides the appropriate decoding, parsing, and execution functionality as pertinent to the interactivity type. Thus, for URL type data, the broadcast receiver **120** may include a browser and the appropriate mechanisms for retrieving, loading, and displaying web pages, JAVA applets, and the like.

### D. Automation Server

### 1. Behavioral Overview of the Automation Server.

The automation server **108** interfaces with the scheduling system **106** to receive the control signals the latter provides to the broadcast program sources **102.** The automation server **108** is further communicatively coupled to the broadcast server **110** to receive status information about which interactive applications are prepared to be broadcast, or are currently being broadcast on which channels. The automation server **108** uses the status information including its playlist, and the control signals to generate specific commands to the broadcast server **110.** These commands instruct the broadcast server **110** to selectively control the preparation of an interactive application to be broadcast, or the execution of an interactive application that is currently being broadcast.

In particular, the automation server **108** generates in response to the control signals, commands to the broadcast server **110** to schedule, start, stop, or cancel execution of an interactive application. The automation server **108** generates sequences of these commands to effect the synchronous execution, including display and/or termination, of the appropriate interactivity for both commercials and television shows, and other broadcast programs.

The control signals from the scheduling system **106** are either explicitly or implicitly associated with particular channels. From the nature of the control signal, its channel assignment, and playlist information, the automation server **108** determines the state and type of the current broadcast program being aired, or the next broadcast program to be aired, as may be appropriate. In particular, the automation server **108** determines if the control signal indicates that the currently broadcast program is a television show or a commercial.

In response to receiving a control signal indicating that a commercial has began broadcasting on a particular channel (*i.e*. a control signal to one of the broadcast sources to play broadcast data for a commercial) the automation server **108** determines whether an interactive application is currently executing on that channel, and if so, generates a command to the broadcast server **110** to suspend (stop) execution of the interactive application. The broadcast server **110** transmits this command to the broadcast receiver(s) **120.** Those broadcast receivers tuned to the appropriate channel suspend execution of the interactive application. The automation server **108** does not however cancel the interactive application, since the broadcast receiver **120** will need to execute the interactive application again once the commercial(s) is over, and thus the interactive application should be available to execute again immediately, and should preserve the state information it had when the commercial(s) began.

The automation server **108** may also determine if there is an interactive application associated with the commercial. If so, the automation server **108** instructs the broadcast server to transmit the interactive application and cause its execution. If there is not an interactive application specifically associated with the commercial, the automation server **108** may signal the broadcast server to begin execution of a default interactive application.

At some point the automation server **108** receives a control signal indicating that the commercial is over. In response to this control signal, the automation server **108** generates a command to the broadcast server **110** to resume execution of the interactive application, which in turn transmits the command to the broadcast receivers **120.** Those broadcast receivers that are tuned to the appropriate channel receive this command, and resume execution of the interactive application for the television program.

The effect perceived by the viewer here is that the interactive application that accompanied the original television show is removed from the television screen during the commercial(s). Interactive applications specific to the commercials, or default applications, are executed and displayed during the commercials. When the commercial(s) are over and the television show is resumed, then the interactive application for the television program re-appears. When the interactive application reappears, it has the state information (e.g. current score) that it had prior to the commercial, thereby preserving the viewer's use of the interactive application.

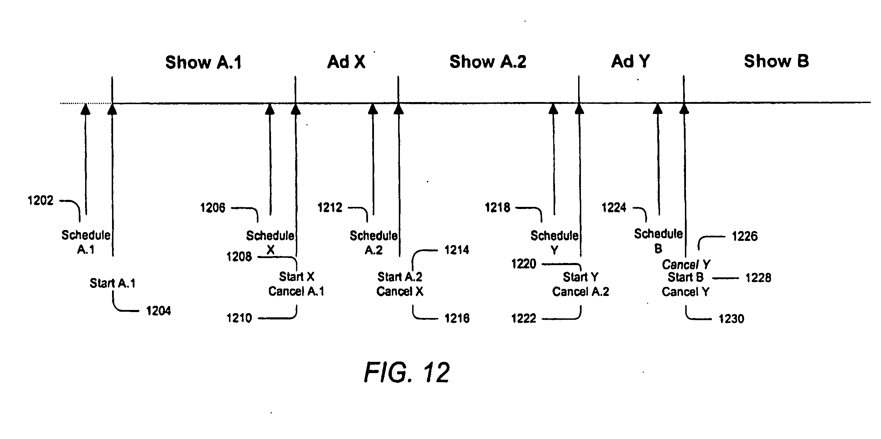

It is typical that a broadcast program, such as a television show, has this format of multiple segments, separated by commercial periods. Interactivity that is associated with the television program should be consistently available with its state information throughout each of the segments. The automation server **108** achieves this result by correlating information extracted from the control signals and identifying each segments that is broadcast so as to determine if the multiple segments are in fact parts of a single television show or other broadcast program and thereby associated with the same interactive application. Having so correlated the otherwise unrelated segments, the automation server **108** is able to appropriately suspend and a resume a single interactive application for the television program across multiple commercial periods. This process is explained in further detail with respect to Fig. 12, below.

The automation server **108** may be embodied as a software product that executes on a conventional workstation or personal computer, such as one that uses the Intel chipset and Microsoft Corp. operating system, or it may be encoded in special purpose ASIC or other hardware embodiment.

### 2. Functional Overview of the Automation Server

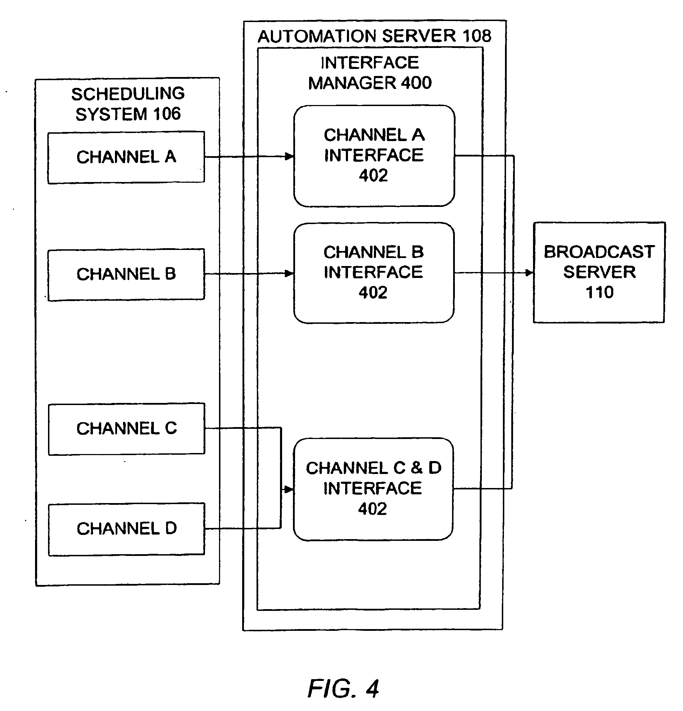

Referring now to Fig. 4, there is shown an illustration of the functional architecture of the automation server **108** in accordance with one embodiment of the present invention. In this embodiment, the automation server **108** includes an interface manager **400.** The interface manager **400** manages a plurality of channel interfaces **402,** each of which is associated one or more channels. Each channel interface **402** receives control signals for its assigned channel(s) from the scheduling system **106,** and outputs commands to the broadcast server **110.**

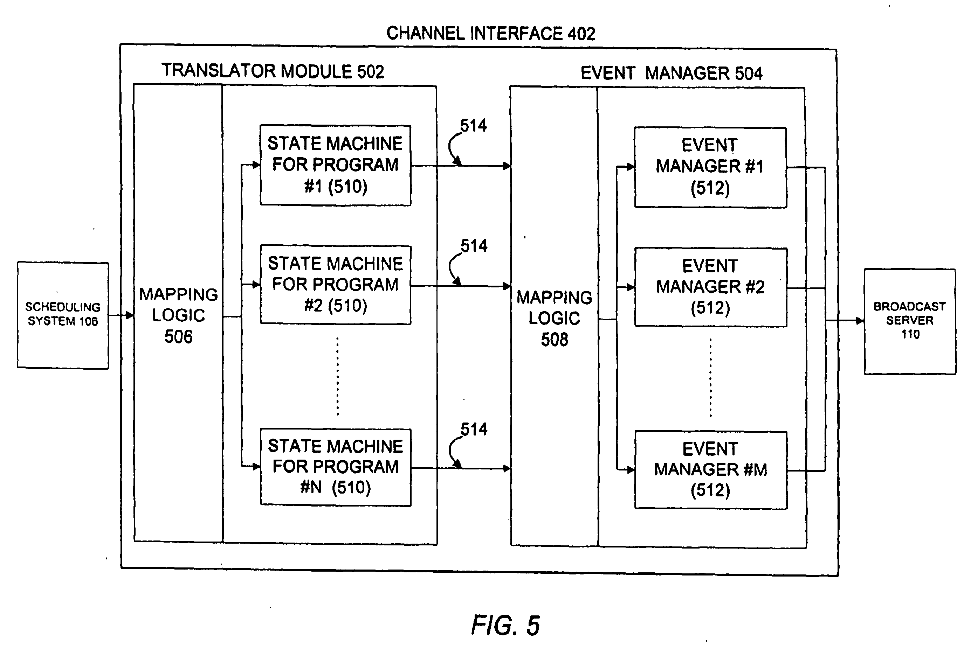

Referring now to Fig. 5 there is shown the functional structure of a channel interface **402.** Each channel interface module **402** includes a translator module **502** and an event manager **504.** The translator module **502** receives the control signals from the scheduling system **106** and translates these signals into atomic commands. The event manager **504** receives the atomic commands and processes them into commands that the broadcast server **110** understands.

### 3. Interface Manager

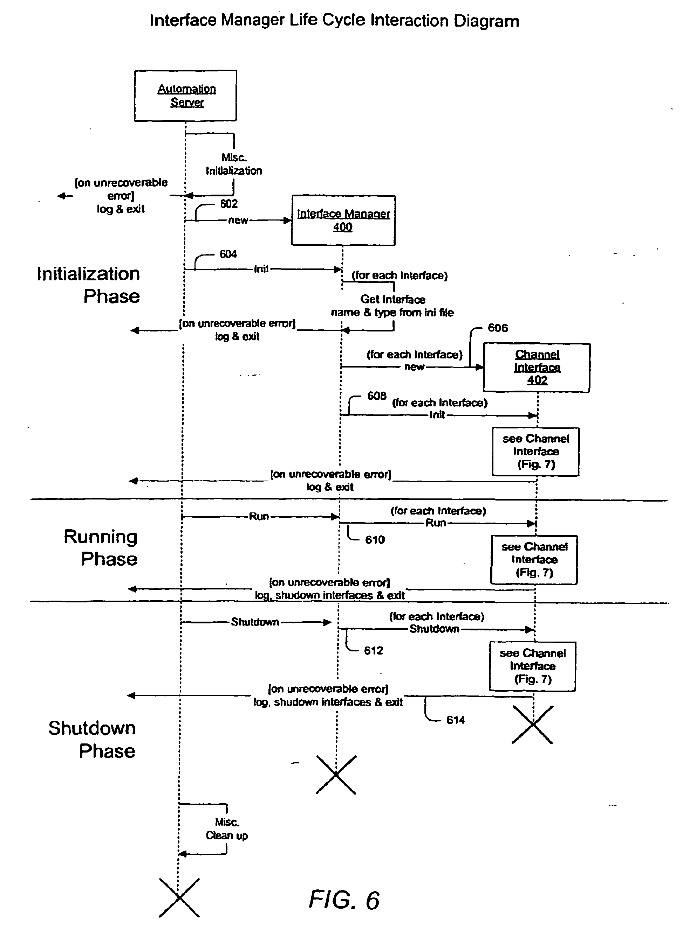

Referring to Fig. 6, there is shown a lifecycle interaction diagram of the interface manager **400.** The interface manager **400** creates and maintains all the channel interfaces **402** for different scheduling systems **106.** The interface manager **400** has three main phases: an Initialization Phase, a Running Phase, and a Shutdown Phase. When the automation server **108** starts up, it creates **602** an interface manager **400** and initializes it. During this Initialization phase, the interface manager **400** reads **604** an initialization (ini) file and creates **606** and initializes **608** different channel interfaces **402** required to work with the scheduling system **106.**

Once the interface manager **400** has created and initialized all the necessary objects, it transitions into the Running Phase. During this phase, the interface manager **400** requests **610** each channel interface **402** to run.

Normally, the automation server **108** and its interface manager **400** will stay in the Running Phase for long periods of time. But when there is an unrecoverable error or if the automation server **108** needs to be upgraded, then automation server **108** is shutdown. During this Shutdown phase, the interface manager requests **612** each channel interface **402** to shutdown.

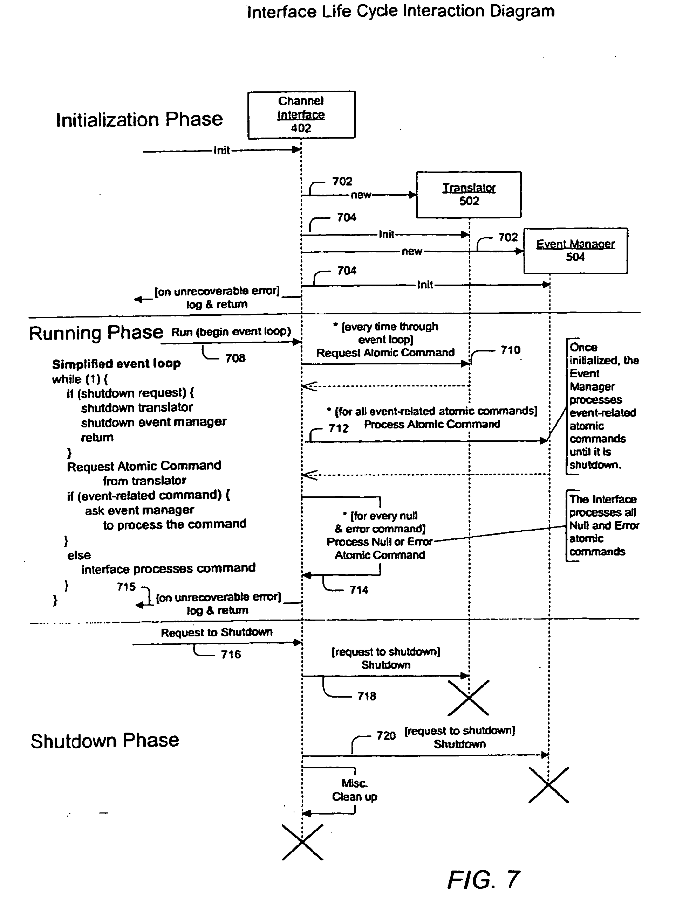

Referring to Fig. 7, there is shown the lifecycle interaction diagram for each channel interface **402.** As shown in Fig. 4, each channel interface **402** contains a translator module **502** and an event manager **504.** A channel interface **402** also has the three main phases: the Initialization Phase, the Running Phase, and the Shutdown Phase.

During the Initialization Phase, it creates **702** and initializes **704** the translator module **502** and the event manager **504.** The event manager's **504** initialization parameters include the following information.
- How to configure broadcast server events for each event type,
- Where to find the interactive application,
- Parameters to fine tune the automation server's timing,
- How to connect to the broadcast server,
- How to respond to abrupt disconnection from the broadcast server, and
- Whether the events are pre-scheduled.

The translator module's **502** initialization parameters include the following information.
- How to connect to the scheduling system,
- How to respond to abrupt disconnection from the scheduling system,
- Scheduling system-specific parameters like how to interpret a particular command if it can be used differently by different broadcasters,
- Fine tuning for how to read and interpret the commands from the scheduling system, and
- Regular expressions or other information used to differentiate commercials from shows.

During the Running Phase, the channel interface **402** goes into an infinite loop (event loop) **708** to process any control signals from the scheduling system **106.** The channel interface **402** may also receive requests directly from a separate automation server client (e.g. shutdown requests). The channel interface **402** requests **710** atomic commands from the translator module **502** and if they are event-related, then it passes **712** them to the event manager **504.** If an atomic command is a Null command or an Error command, then the channel interface **402** processes **714** those commands itself. If an unrecoverable error occurs, then it logs the error and exits **715** from the event loop.

During the Shutdown Phase, the channel interface **402** has received **716** a Shutdown request, so it forwards **718** the request to the translator module **502** and the event manager **504** so they can cleanly shutdown. Once they have shutdown, the channel interface **402** cleans itself up and returns from the event loop to shut itself down.

### 4. Overview of the Translator Module

Each broadcast program may be understood as having a specific "lifecycle." This lifecycle in managed by the scheduling system **106** which likewise operates essentially as a state machine with respect to each broadcast program. However, the scheduling system **106** only provides a limited amount of information about a broadcast program, typically only as much as needed to control a broadcast source.

For each broadcast program then, the translator module **502** reconstructs of the state machine behavior on the limited information it receives from the scheduling system **106** to recreate the lifecycle of the broadcast program. This in turn allows it to provide the appropriate atomic commands to the event manager **504** for managing interactive applications that may be relevant to the broadcast program. Thus, as shown in Fig. 5, the translator module **502** creates and maintains a state machine **510** for each unique broadcast program that it identifies in the control signals from the scheduling system **106.**

Each translator module **502** is specific to the type of scheduling system **106** with which it communicates, and provides a mapping of the states from the scheduling system **106** to a set of events that the translator module **502** can understand. Since each type of scheduling system **106** provides different types of information in its control signals, there is a need to account for errors, missing information, and so forth, to map from the implicit state machine of the scheduling system **106** to a state machine which is defined by the translator module **502.**

As noted, there are various types of scheduling systems **106,** each of which outputs different types of control signals having various levels of information, and thus each of the translator modules **502** corresponds to a certain type of scheduling system **106.** However, it is believed that all scheduling systems **106** can be described with respect to an 'ideal' scheduling system **106** which provides the most complete set of control signals. Table 1 describes the types of control signals provided by an ideal scheduling system **106,** and the data that is included in each of these ideal signal types.

**Table 1: Control Signals for Ideal Scheduling System**

| Control Signal | Data |
|---|---|
| Pre-load | Program ID |
| | Channel |
| | Event type |
| | Duration |
| | Interactive application location |
| Pre-roll | Program ID |
| | Channel |
| Event starts | Program ID |
| | Channel |
| Event stops | Program ID |
| | Channel |

These signals are ideal in the sense that if all of the specified data is present, the translator module **502** can very easily determine the appropriate state of the broadcast program, and form the needed data for communication to the event manager **504.** In non-ideal scheduling systems **106,** the translator module **502** uses additional external sources of data to determine the appropriate data for transmitting to the event manager **504,** such as the broadcast server **110**'s playlist, and information on the relationship of interactive applications to broadcast program identifiers as contained in the interactive application database.

The pre-load signal is a control signal that is typically used by a scheduling system **106** to cause a broadcast source **106** to load a broadcast program in anticipation of being broadcast at a subsequent time. Ideally, this signal includes a program ID which uniquely identifies the broadcast program to be loaded. A channel identification specifies the channel for the broadcast; the channel may be implicit or explicit. The duration specifies the duration of the broadcast program. This is used by the automation server **108** to cause termination of an interactive application in the absence of an explicit stop signal from the scheduling system **106.**

The pre-load signal may or may not be received at a precise time. That is, in some scheduling systems it is received precisely (to partial second accuracy in advance of the broadcast of the event). In others it could be received from seconds to hours in advance of the broadcast of the event. The pre-roll, event starts, and event stops signals must be precisely timed. If a native control signal is being used for both pre-load and any of the other control signals it must be precisely timed.

The interactive application location specifies the location of an interactive application that is designated to accompany the broadcast program. This location is specified within the interactive application database **112,** or may be a path name into a file directory where the interactive applications are stored. The event type defines the type of broadcast program. The number of types is dependent on the system design, and may differentiate simply between television shows and commercials, or further identify program guides, close-captioning, or other types of broadcast content. Event types are discussed further below with respect to the event manager **504,** and Table 7.

As these signals and their data content are for an ideal scheduling system **106,** actual scheduling system **106** may use fewer ones of these signals, and only some of the specified data, or both. However, the translator module **502** and the event manager **504** operate to complete whatever data is missing from these control signals, and thereby manage the broadcast server **110.**

Given the ideal control signals, an 'ideal' translator module **502** can be defined. This ideal translator module **502** maps the control signals from the scheduling system **106** into a set of atomic commands which are used by the event manager **504.** This ideal translator thus represents the lifecycle of any broadcast program and how the event manager **504** can respond to the different states of the broadcast program's lifecycle to generate commands to the broadcast server **110** to control the execution of an interactive application associated with the broadcast program.

Table 2 lists the atomic commands generated by the translator module 502:

**Table 2: Atomic Commands to Event Manager**

| Atomic Command | Data for Command | Description |
|---|---|---|
| Schedule | Program ID, Channel, Event Type, interaction application fileLocation (optional), Duration (optional) | Instructs the event manager **504** to identify an interactive application associated with the program ID for the broadcast program, and request the broadcast server to prepare to broadcast the identified interactive application. |
| Start | Program ID, Channel | Instructs the event manager **504** to identify an interactive application associated with the program ID for the broadcast program, and to request the broadcast server to start broadcast of the identified interactive application. |
| Stop | Program ID, Channel | Instructs the event manager **504** to identify an interactive application associated with the program ID for the broadcast program, and to request the broadcast server to stop broadcast of the identified interactive application. |
| Cancel | -Program ID, Channel | Instructs the event manager **504** to identify an interactive application associated with the program ID for the broadcast program, and to request the broadcast server to stop broadcast of the identified interactive application, and unload the interactive application. The Cancel command may be understood as opposite of the Schedule command. |
| Secondary Trigger | Program ID, Channel | Instructs the event manager **504** to request the broadcast server to trigger specific behavior in the broadcast interactive application. |

Since it takes time for the broadcast server **110** to schedule an interactive application, in some circumstances the translator module **502** may not send a schedule atomic command early enough to allow the interactive application to be synchronized with the video data that is being broadcast. In this case the interactive applications can be pre-scheduled on the broadcast server **110** by some other manual or automatic process and the automation server **108** can save time by looking for the pre-scheduled interactive application instead of instructing the broadcast server **110** to schedule it. In this mode, the automation server **108** does not cancel pre-scheduled events since they may be broadcast again. Instead, the process that scheduled them is responsible for canceling them.

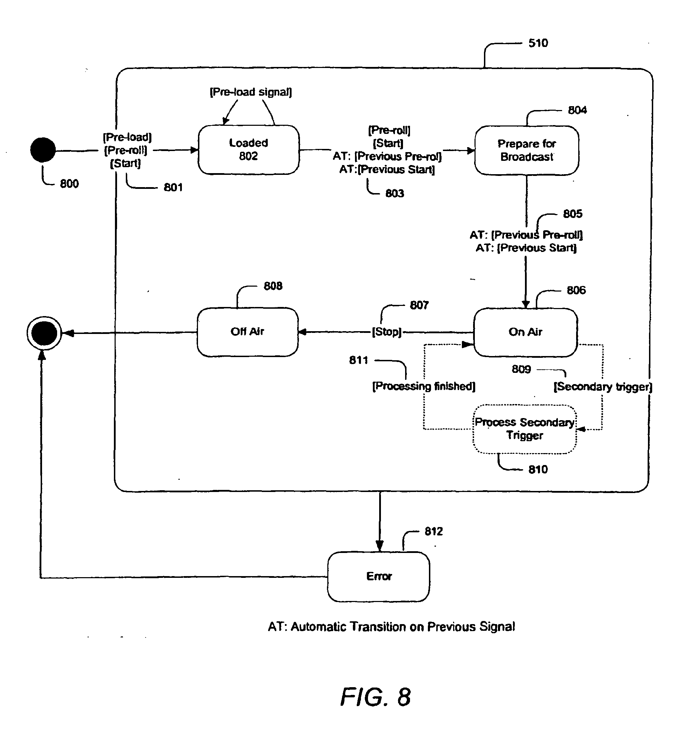

The actual translator modules **502** for any specific scheduling system **106** are derived from the ideal translator module **502.** Referring now to Fig. 8, there is a shown a state machine description of an ideal translator state machine **510.** Each broadcast program may be understood to transition through a number of states defined by the control signals.

The state machine begins in the start state **800.**

From this state, the translator module **502** transitions to the loaded state **802.** The loaded state **802** may be reached from any of three different ideal signals **801:** a pre-load, a pre-roll or a start signal.

Normally, the first control signal **801** received by the translator module **502** will be the pre-load signal. On the scheduling system **106** this signal indicates that the broadcast program is about to be broadcast. The start state **802** is also reached, as noted, on a pre-roll signal, if a pre-load signal has not be previously received. A pre-roll signal also indicates that the broadcast program is about to be broadcast.

In the loaded state **802,** the translator module **502** determines the appropriate interactive application associated with the broadcast program and schedules its execution. The translator module **502** determines, as nearly as possible the ideal data for this state, such as the broadcast program ID, event type, and location of the associated interactive application for the broadcast program. Event type describes the type of broadcast program, such as a television show, commercial, or unknown. Event types are further described below. In some cases the channel assignment is implicit since the translator module **502** is associated with a specific channel; in other cases the channel may be explicitly encoded in the control signal.

More particularly, the translator module **502** logs the current time and signal that was received. The translator module **502** sets the program ID for the associated interactive application to the program ID contained in control signal. If necessary, the translator module **502** calculates the event type using regular expressions (see below). Otherwise the translator module **502** sets the event type to Unknown, and leaves it to the event manager **504** to determine from data contained in the interactive application itself. If necessary, the translator module **502** also sets the location of the interactive application to be the program ID; again the event manager **504** will determine the actual location based on the program ID and segment number of the broadcast program, as appropriate.

The translator module **502** then creates and outputs a schedule command to the event manager **504,** using the created ideal data. This schedule command instructs the event manager **504** to determine whether there is an interactive application associated with the program ID for the broadcast program, and if so, request the broadcast server to prepare to broadcast the identified interactive application.

The next state is the prepared state **804.** This state is reached from the loaded state **802** on either a pre-roll signal or a start signal. There are also automatic transitions to the prepared state **804** if a pre-roll signal or a start signal was the first signal **801** received. That is, if either of these signals are received as the first signal **801,** then the translator module **502** transitions automatically through the loaded **802,** prepared **804,** and on air **806** states.
The prepared state **804** controls the timing of the atomic commands sent to the event manager **504.** Before it is started up the automation server **108** is configured as to how early before the start of the broadcast of the scheduling system event a pre-roll signal may be received. This is usually between 1 to 10 seconds and is usually measured in milliseconds. Upon receiving a pre-roll or start signal the ideal translator module enters the prepared state **804.** The prepared state **804** preferably pauses for X - Y microseconds, where X is how early the pro-roll signal comes and Y is the amount of time required for the event manager **504** and broadcast server **110** to start the interactive application (event) for the broadcast program. After that time has elapsed, the translator module **502** automatically transitions to the on air state **806** where the event is started. It also generates a start signal **805** that may be used by other event state machines (see section on Off Air state below). Note that if X- Y is less than zero or if the control signal is an start signal, then the prepare state **804** does not wait at all. Instead it just transitions to the on air state **806** to allow the broadcast server event to be started as soon as possible.

The "on air" state **806** occurs automatically after the prepared state **804.** In this state, the translator module **502** creates and sends a start atomic command to the event manager**504.** When combined with the pause introduced in the prepared state **804,** this has the effect of starting the interactive application to begin execution with the broadcast program.

During the on-air state **806** additional signals which form secondary triggers **809** may be received and processed **810.** These secondary triggers may result in execution of additional functionality associated with the interactive application being broadcast.

An event stop signal **807** terminates its broadcast, resulting in an "off air" state **808.** This state cancels the event. That is, the translator module **502** creates a cancel command based on the current program ID, and sends this to the event manager **504** to cancel the current interactive application. This state can be triggered by control signals associated with other events. For example, if the scheduling system's native control signals to not include an event stops signal, then the event starts signal for the next event will cause the previous event to be stopped.

On an error signal, the translator module **502** creates a cancel command based on the current program ID, and sends this to the event manager **504** to cancel the current interactive application.

These states thus represent the lifecycle of each broadcast program, from the perspective of a scheduling system **106.** From this information, the automation server **108** determines the state for an interactive application associated with the broadcast program, and generates appropriate commands to the broadcast server **110** for that state.

Accordingly, a translator module **502** is designed to manage the broadcast programs on a specific channel in correspondence with these states. More particular, the translator module **502** maintains a state machine **510** for each broadcast program ID that it receives. This state machine is created each time a new broadcast program ID is received, and maintained until the scheduling system **106** indicates that the broadcast program is terminated.

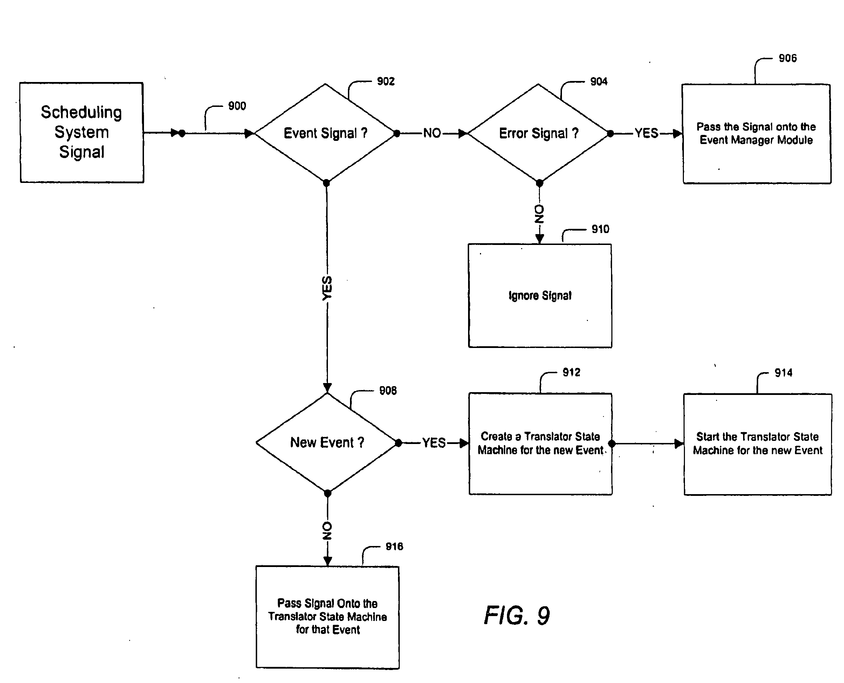

Referring to Fig. 9, there is shown a flow chart of the overall operation of the translator module **502,** and particularly its mapping logic **506.** Each time the translator module **502** receives **900** a control signal from the scheduling system **106,** it determines **902** whether the control signal relates to an event which it manages. An event is indicated by a program ID or other data indicative of a broadcast program, as opposed error signals or other data, such as startup, shutdown, error, or system messages.

If the control signal is not for an event, the translator module **502** determines **904** if it is an error signal. Error signals are passed **906** to the event manager module **504** for handling.

If the control signal is not an error signal, then it is ignored **910.**

If the signal is an event signal, the translator module **502** applies mapping logic **506** to determine whether the identified event is a new event or one for which there already exists a state machine **510,** using the program ID of the event as the key to the state machine. If the event is a new event, then the translator module **502** instantiates **912** a new state machine **510** for the program ID and event, and starts **914** the state machine **510.**

If there is an existing state machine, the event control signal is passed **916** to the state machine **510** associated with the program ID. The state machine **510** then handles the event according to its state logic as described above with respect to the ideal state machine, and as further elaborated below with respect to the specific translator types.

### 5. Translator Types

Each scheduling system **106** generates its own particular set of control signals that are interpreted by a translator module **502.** The following sections describe how specific translator modules are implemented in terms of the ideal translator module's state diagram. That is, the scheduling system-specific control signals can be mapped onto the generic control signals in the ideal translator. Each specific translator module **502** goes through the same states as described in the ideal translator module. However, the state actions for each specific translator vary slightly to account for differences in the control signals that they receive.

The mapping from ideal translator state machine to specific state machine for each type of translator is summarized in the following tables 4-6. The column headings for these tables are defined in Table 3:

**Table 3: Column Headings for Tables 4-6**

| Column Heading | Description |
|---|---|
| Specific Signal | The scheduling system-specific control signal received by the translator module. |
| Specific Signal's Data | The data included with that scheduling system-specific control signal. |
| Ideal Signal | The ideal control signal that the system-specific control signal maps to. |
| Ideal Data | The data required by the ideal control signal. If some of it is not available in the system specific control signal's data, then it will be calculated either in the state actions or in the event manager. |
| State Transition | The state that is transitioned into by this control signal. In some cases this will be an automatic transition (i.e. no control signal is required to move from the previous state into this one). |

### a) Translator Type 1: Basic Scheduling System

A basic scheduling system **106** is one which encodes very little data in its control signals, typically no more than a program ID. Interpretation of this control signal via the translator's state machine involves creation and inference of appropriate data to recreate what would have been the ideal data for an ideal control signal. An example of a basic scheduling system **106** is a Louth ADC-100.

In one embodiment, the automation server **108** interfaces with a basic scheduling system by emulating a subtitler. In one embodiment, such as with a Louth scheduling system, the emulated subtitler is the Cavena Subtitler. Normally, the basic scheduling system **106** sends signals to the subtitler to prepare a subtitle, start a subtitle, and stop a subtitle that is being displayed over the video program data of a broadcast program. In the present invention, the automation server **108** uses these control signals to synchronize interactive applications with video.

Some basic scheduling systems **106** preferably have the ability to provide pre-roll information. In this case, it sends a Prepare Signal a configurable number of seconds in advance of the actual start of the broadcast program. The automation server **108** uses this information to pre-load and start the interactive application earlier so it can reach the user right when the broadcast program starts. Accordingly, the type 1 translator transitions through Loaded **802,** Prepared **804,** and On Air **806** states when it receives the Prepare signal. This is described in Table 4 as an Automatic Transition.

When the automation server **108** receives a Start Signal **805** from a basic scheduling system **106,** it knows that the interactive application has already started using the Prepare Signal, so it ignores the Start Signal. If there is an Error in the basic scheduling system's control signal, the automation server **108** stops the current interactive application and moves to the Error State **812.**

Table 4 summarizes the relationships between native control signals for a basic scheduling system **106,** the ideal control signals, and the state transitions for the state machine of the ideal translator module **502.**

**Table 4: Control Signals and State Transitions for Translator for a Basic Scheduling System**

| Scheduling System Signal | Control Signal Data | Ideal Signal | Ideal Data | State Transition |
|---|---|---|---|---|
| Prepare Signal | Program ID | Pre-load | Program ID Event Type Channel Interactive application location | Loaded |
| None | None | Pre-roll | Program ID Channel | Prepared (Automatic Transition) |
| None | None | On Air | Program ID Channel | On Air (Automatic Transition) |
| Start Signal | None | None | None | None |
| Stop Signal | None | Off Air | Program ID Channel | Off Air |
| Error | None | Error | None | Error |

### b) Translator Type 2: Code-Based Scheduling System

A second type of scheduling system **106** is one that uses identification codes to selectively distinguish between television shows and commercials. An example of this type of scheduling system **106** is an ISCI code-based system such as used by ESPN Inc. in its broadcast systems. In this type of system, ISCI codes are present in the broadcast programs such as commercials and not present in television shows. These types of codes may be provided directly by the scheduling system **106** or indirectly from being pre-recorded on the media (e.g., video tape) in conjunction with the broadcast programs.

Other types of code-based systems include those that use codes that individually identify interactive applications, URLs, URI's, and the like.

The automation server **108** interfaces with a code-based scheduling system **106** through a VITC timecode reader or similar timecode readers. The code-based scheduling system sends ISCI information during commercials through a VITC timecode and no ISCI information during shows. The automation server **108** uses this information to selectively add interactive applications during commercials and shows. Since the scheduling system's control signals do not specify a show by program ID, only a default interactive application is supported.

Generally, when the control signal contains the presence of an ISCI or similar code, the translator **502** knows that a commercial has started. Accordingly, the state machine **510** transitions through Loaded, Prepared, and On Air states and starts the interactive application. These transitions occur automatically as described in Table 5 as Automatic Transitions. In the Loaded state, the ISCI code (or other code such as URL, application identifier, and the like) is used as the program ID (e.g., saving the code as the program ID) for ideal data. This allows the event manager **504** to determine the appropriate interactive application.

On a change in ISCI code, the translator **502** knows that a new commercial has begun. Accordingly, the state machine **510** transitions through Off Air state and stops the interactive content, creating the cancel atomic command to cancel the current interactive application for the commercial. The translator **502** creates a new state machine **510** for the new ISCI code, that state machine **510** transitions through Loaded, Prepared, and On Air states, and a start atomic command is generated to start the new commercial's interactive application.

When the control signal does not contain an ISCI code, the translator **502** knows that a television show has started (or is in progress). Accordingly, the state machine **510** transitions through Off Air state and stops the interactive content, creating the cancel atomic command to cancel the current interactive application for the commercial. Based on the same signal (*i.e.* the absence of any ISCI code) a new state machine **510** for an unknown program ID with a show event type is created. As discussed below, the event manager will determine that this program ID should be associated with the default show. The state machine **510** goes through Loaded, Prepared, and On Air states, and generates a start atomic command to start a default application for the television show. When an ISCI code is detected again, the state machine **510** goes through the Off Air state, and cancel atomic command is generated.

Because there are often small gaps of no data in code-based systems (especially during transitions between codes), the translator **502** will wait a configurable amount of milliseconds before detecting the absence of ISCI codes. This avoids false detections.

If there is an Error in the control signal, the state machine **510** also cancels the current interactive content and moves to the Error State.

Table 5 summarizes the relationships between native control signals for a code-based scheduling system **106,** the ideal control signals, and the state transitions for the state machine of the ideal translator module **502** for both commercial events and the default show event.

**Table 5: Control Signals and State Transitions for Translator for Code Based Scheduling System**

| Commercial Control Signals | | | | |
|---|---|---|---|---|
| Scheduling System Signal | Control Signal Data | Ideal Signal | Ideal Data | State Transition |
| Presence Of ISCI Code or change in ISCI Code | ISCI Code | Pre-load | Program ID = ISCI code Event Type = commercial Channel | Loaded |
| | | | Interactive application location | |
| None | None | Pre-roll | Program ID Channel | Prepared (Automatic Transition) |
| None | None | On Air | Program ID Channel | On Air (Automatic Transition) |
| Absence Of ISCI Code or change in ISCI Code | None Or Non-ISCI Data Or ISCI Code | Off Air | Program ID Channel | Off Air |
| Error | None | Error | None | Error |

| Default Show Control Signals | | | | |
|---|---|---|---|---|
| Scheduling System Signal | Control Signal Data | Ideal Signal | Ideal Data | State Transition |
| Absence Of ISCI Code | None Or Non-ISCI Data | Pre-load | Program ID = unknown Event Type = show Channel | Loaded |
| | | | Interactive application location | |
| None | None | Pre-roll | Program ID Channel | Prepared (Automatic Transition) |
| None | None | On Air | Program ID Channel | On Air (Automatic Transition) |
| Presence Of ISCI Code | ISCI Code | Off Air | Program ID Channel | Off Air |
| Error | None | Error | None | Error |

### c) Translator Type 3: Playlist-Based Scheduling System

A third type of scheduling system **106** that its supported by the present invention is a playlist based scheduling system. In this type of system the control signals identify the program being broadcast and its duration, so as to provide the elements of a playlist; also included in some instances will be the program title of the broadcast program. An example of this type scheduling system is the Library Management System (LMS) BZCA-1100 multi-cassette system running the BZCA-1102 Spot Reel Option software, provided by Sony Corporation.

The automation server **108** interfaces with this type of scheduling system **106** by functioning as a control terminal. The control terminal displays a transmission playlist, which is a table of scheduled events. The LMS BAG-1200 control terminal is one example. The playlist contains event information such as the Program ID, Program Title, Duration, for each broadcast program.

The playlist based translator module **502** captures and parses all the event information received from the scheduling system **106.** Events appear in a transmission playlist ahead of their broadcast time. When an event (e.g., broadcast program) appears in the transmission playlist, the translator **502** pre-loads the interactive application for that event and transitions to the Loaded state **802.** The scheduling system 106 provides pre-roll information for each event by sending an event status of a play control signal a configurable number of seconds in advance of the event going on air.

The translator module **502** transitions through the Prepared **804** and On Air **806** states and starts the interactive application when it receives the play control signal for an event. If the translator **502** misses the play control signal for an event due to network or some other problem and receives the on-air or online control signal for an event, it transitions to the On Air state **806** and starts the interactive application. In this case, the automation server **108** misses the benefit of Pre-roll information, but the interactive application is started nevertheless.

If the translator module **502** receives an on air or online signal, and is not already in the Prepared state **804,** then it treats the on air/online signal as a Play signal, and first transitions to the Prepared state **804** and then automatically to the On Air state **806.**

When event data disappears from the transmission playlist, the translator module **502** transitions to the Off Air state **808,** and instructs the event manager **504** to cancel the current interactive application.

If any other kind of Error such losing a connection to the scheduling system occurs, then the automation server **108** stops the current interactive application and moves to the Error State.

Table 6 summarizes the relationships between native control signals for a playlist based scheduling system **106,** the ideal control signals, and the state transitions for the state machine of the ideal translator module **502.**

**Table 6: Control Signals and State Transitions for Translator for Playlist Based Scheduling System**

| Scheduling System Signal | Control Signal Data | Ideal Signal | Ideal Data | State Transition |
|---|---|---|---|---|
| Event data appears in the look ahead window | Program ID Program Title Duration | Pre-load | Program ID Event Type Channel | Loaded |
| | | | Interactive application location | |
| Play | Program ID Program Title Duration | Pre-roll | Program ID Channel | Prepared |
| On Air or Online | Program ID Program Title Duration | On Air | Program ID Channel | On Air (Automatic Transition) |
| Event data disappears from the look ahead window | Program ID Program Title Duration | Off Air | Program ID Channel | Off Air |
| Error | None | Error | None | Error |

### 6. Translator Event Type Calculation based on Regular Expressions

Scheduling systems **106** that track the event type of a program ID can send that information directly to the automation server **108.** Since many scheduling systems **106** do not support this feature, some broadcasters **114** use program IDs that differentiate between different types of programs like shows and commercials. The automation server **108** uses this information to its benefit. The translator **502** uses that information to determine which type of event to schedule. For example, the program ID of commercials may have a prefix of "VT" and the program ID of a television show may have a different prefix or none at all. The automation server **108** uses regular expressions with the program IDs to differentiate between commercials and shows. The event type is set to commercial if the program ID matches the criteria for a commercial or it is set to show if the program ID matches the criteria for a show, based on a regular expression analysis. If the broadcaster **114** does not name the program IDs so as to differentiate between shows and commercials, then the event type is set to Unknown. In such cases, the event manager **504** will look at the actual interactive application file for a flag that tells it whether the content is for a commercial or a show.

### 7. Overview of the Event Manager

Referring again to Fig. 5, the event manager **504** receives the various atomic commands **514** from the translator module state machines **510,** and responsively instructs the broadcast server **110** as to the control of its interactive applications.

Generally, in a conventional system without an automation server **108,** the broadcast server **110** sends interactive applications to a data insertion unit **116** according to a pre-defined playlist, which is a list of broadcast server events.

However, the automation server **108,** via the control signals provided by a scheduling system **106,** is able to automate the creation of the broadcast server's playlist and dynamically add, remove, and modify events on the broadcast server's playlist to match near real-time changes to the scheduling system's playlist. While the broadcast server's playlist may contain events for all channels, the event manager **504** only manages events on the channels for which it receives atomic commands.

Fig. 5 shows how the translator module **502** sends atomic commands **514** to the event manager **504.** The event manager **504** interprets the atomic commands **514** to generate a stream of primitive commands to the broadcast server **110.** As the event manager **504** receives atomic commands **514,** it maps the program ID's contained therein to specific broadcast server events via mapping logic **508.** If an appropriate broadcast server event does not exist for a particular program ID, then the event manager **504** will create a broadcast server event. In general, the event manager **502** will create, modify, or destroy broadcast server events as needed.

The event manager **504** maintains a separate state machine **512** for each broadcast server event that it manages. Each state machine is assigned to an event by the program ID of the event. Atomic commands from the translator module **502** are then routed to these state machines based on their program ID's. This process is described below in the Atomic Command Mapping Logic section. The event state machine **512** is responsible for generating the correct broadcast server primitive commands. It is described in detail in the Event State Machine section, below.

The use of two state machines of the translator module **502** and the event manager **504** enables any of the various different types of scheduling systems **106** to be easily interfaced with the automation server **108,** while allowing for a relative simple and efficient event manager **504** implementation. This allows a new translator module **502** to be created for operation with a new scheduling system **106,** without necessitating changes in the event manager **504.**

Since different event types can cause the atomic command mapping logic **508** and the event state machines **512** to behave differently, the following section defines the various event types that the event manager **504** supports.

### a) Event Types

Event types determine how a broadcast server event should behave. There are three different categories that define event behavior.
- Program type,
- Segmentation, and
- Interactivity

Program type can be commercial, show, or unknown. A commercial is a self-contained piece of television programming that is usually short (30 to 120 seconds). A show is a television program that contains one or more segments. One or more commercials usually play between television show segments. If the automation server **108** cannot determine the program type from the control signals sent by the scheduling system **106,** the type is set to unknown. Usually unknown events may be treated as self-contained programming like commercials, or they may be handled like television shows.

Program type and segmentation are intimately related. In a preferred embodiment, television shows are always treated as segmented, and commercials are always treated as not being segmented. Unknown programs can be treated as one or the other. The handling of segmented television shows is further described below with respect to Fig. 12.

Interactivity (e.g., an interactive application) can either be a normal interactive event or a default interactive event. A normal event is an event that has a specific interactive application associated with it. If the event manager **504** can not find a specific interactive application associated with an event in the interactive application database **112,** it may substitute a default interactive application for the duration of the event. A null event may also be specified as the default event, which means no interactive application will be broadcast for the duration of the event.

The following table enumerates six event types and summarizes each event type's behaviors.

**Table 7: Event Types**

| Event Type | Program type | Interactivity | Segmentation |
|---|---|---|---|
| Commercial event | Commercial | Normal | No |
| Show event | Television Show | Normal | Yes |
| Unknown event | Unknown | Normal | Maybe |
| Default Commercial event | Commercial | Default | No |
| Default Show event | Show | Default | Yes |
| Default Unknown event | Unknown | Default | Maybe |

Event types are also used to determine broadcast server event settings.

### b) Determining an Event Type

The event type is initially determined by the translator module **502** and passed to the event manager **504** in the atomic command **514.** In some cases the translator module **502** does not have enough information to determine the actual event type. The translator module **502** makes an initial determination of event type, but the event manager **504** may change the event type if it has better information. The event manager **504** has two pieces of information that the translator module **502** does not have.
1. The event manager **504** knows if the interactive application exists for the program ID of the event, and
2. The event manager **504** can get the event type information from the interactive application. The application contains information that determines if it is suspendable or not. The automation server **108** assumes that all television shows are suspendable and all commercials are not suspendable.

Combining the event manager's and the translator module's information, the event manager **504** can determine the proper event type as summarized in the following table:

**Table 8: Event Manager Type Determination**

| Event Type Specified by Translator Module | Interactive Application exists? | Interactive Application's Event Type | Resulting Event Type |
|---|---|---|---|
| Show | Yes | Don't care* | Show |
| Commercial | Yes | Don't care* | Commercial |
| Unknown | Yes | Show | Show |
| Unknown | Yes | Commercial | Commercial |
| Show | No | Not available | Default Show |
| Commercial | No | Not available | Default Commercial |
| Unknown | No | Not available | Default Unknown |

| | | | |
|---|---|---|---|
| *: Note that the translator module's event type always overrides the interactive application's event type. | | | |

### c) Atomic Command Mapping Logic

The event manager **504** maintains a separate state machine **512** for each event that it manages. When the event manager **504** receives atomic commands **514** from the translator module **502** it must associate the atomic command's program ID with the appropriate broadcast server event, and pass the atomic command to the appropriate state machine **512.** This process is handling by the event manager's mapping **logic508.**

The mapping logic **508** creates and maintains an event association table, which associates program ID's with broadcast server event ID's. Only scheduled atomic commands can cause new broadcast server events to be created. Consequently only they can add a new row to the event association table associating a program ID with the new broadcast server event's ID. The association is removed from the table when the event has traversed its state machine **512** and the state machine is destroyed.

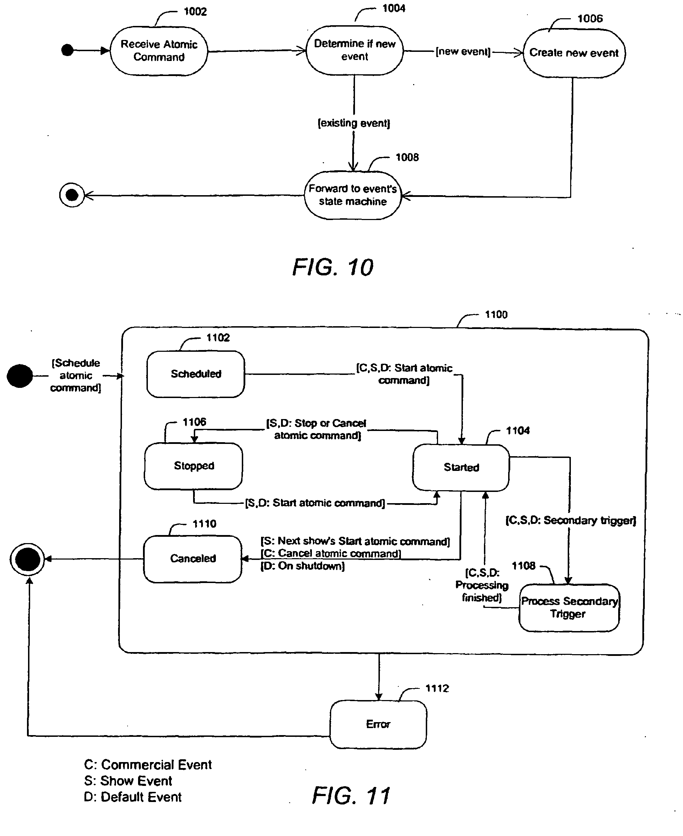

Fig. 10 illustrates the state behavior of one embodiment of the mapping logic **508.** Table 9 describes this figure.

**Table 9: Event Manager State Machine**

| State/Activity | Behavior |
|---|---|
| Receive atomic command **(1002)** | • Atomic command is received from the translator module. Only event-related atomic commands can be processed by the event manager **504.** |
| | • Go to Determine if new event state **(1004).** |
| Determine if new event **(1004)** | • If command is a schedule atomic command and program ID does not currently have a broadcast server event associated with it, then go to Create new event state **(1006).** |
| | • Otherwise go to Forward to event's state machine **(1008).** |
| Create new event **(1006)** | • Create new state machine for event and associate the program ID with this new event in the event association table. (See event manager state machine diagram, Fig. 11) |
| | • Go to Forward to event's state machine **(1008).** |
| Forward to event's state machine **(1008)** | • Forward the atomic command to the event's state machine. (See event manager state machine diagram, Fig. 11). |

When creating a new event state machine, the mapping logic **508** determines the event type, in accordance with the rules of Table 8, above.

For normal non-segmented interactive events there is a one-to-one mapping between scheduling system event and broadcast server event in the event association table. Two notable exceptions are discussed next.

### d) Special Case Event Mapping

In general there is a one-to-one mapping between scheduling system events and broadcast server events. Two notable exceptions are discussed here.

### (i) Default Events

On startup, the event manager **504** creates three broadcast server events (one for each default event type). These are the first three events in the event association table. As described above with respect to event types, the default events are chosen when an interactive application can not be found for the specified program ID. To support this the event association table allows many program ID's to map to the same default event ID. When the mapping logic **508** receives a schedule atomic command that has no interactive application associated with it, the mapping logic **508** associates that program ID with the default event that corresponds to the even type specified in the schedule atomic command. The mapping logic **508** does not pass along the schedule atomic command, since the default event is already scheduled.

### (ii) Segmented Events

As previously noted, a single television show can be segmented into multiple parts. To the scheduling system **106** the show is a series of multiple events each with their own program ID. To the broadcast server the television show is a single event that is suspended and resumed for each segment. Consequently, the event association table bridges this gap by matching multiple program ID's to a single broadcast server event.

If the scheduling system **106** provides information about segmenting in its program ID, the event mapping logic **508** creates a new event state machine **512** for the first segment of the television show and automatically maps all other segments to the same event state machine **512.**

Unfortunately, most scheduling systems do not provide this information. Thus, the automation server **108** determines if two different program ID's are associated with the same television show by determining whether both program ID's are mapped to the same interactive application in the interactive application database **112.** When the mapping logic **508** determines that the new program ID is for another segment of a television show that is already listed in the event association table it:
1. Associates the new program ID with the pre-existing broadcast server event in the event association table, and
2. Does not pass along the schedule atomic command since the show has already been scheduled.

This is described in more detail below, in the Event State Machine and Segmentation sections.

### e) Broadcast Server Primitive Commands

The event manager's state machines emit four broadcast server primitive commandsschedule, start, stop, and cancel-to control the broadcast server. These are analogous to the atomic commands of the same name. Schedule prepares an interactive application for broadcast and add it to the broadcast server's playlist. Start begins broadcast of the interactive application, and stop ceases broadcast of it. Cancel stops the interactive application (if not already stopped), removes the interactive application from memory, and deletes the associated event from the broadcast server's playlist.

In alternate embodiments, these particular commands may be extended to include other more complex behaviors, such as suspend indefinitely, suspend for selected time interval, resume immediately, resume after selected time interval, and so forth.

In addition, the content of the commands, that is, the type of interactivity that may be managed by the commands is variable, again dependent on the types of interactivity that is decided by the system designer. Thus, the commands may schedule or start triggers for previously broadcast interactivity, forms or other data, URLs, web pages, Javaapplets or other hypermedia interactivity and the like.

### 8. Event State Machine

Atomic commands end their life in a particular event state machine **512.** Each event state machine **512** is associated with a broadcast server event and controls all operations on that event. The atomic command mapping logic **508** determines which state machine **512** receives a particular atomic command (with a few exceptions noted below).

Fig. 11 illustrates the behavior of an event state machine **512,** with details for commercials, television shows, and default event types. The event state machine traces the lifecycle of an event. In Fig. 11, state transitions are labeled to indicate to which types of events they apply, as follows:
C: Transition applicable to commercial events.
S: Transition applicable to television show events.
D: Transition applicable to default events.
In general an event will go through the following states:

Scheduled **1102:** A schedule atomic command from the translator module **502** causes the event to be scheduled on the broadcast server. The state machine **512** emits the schedule broadcast primitive, which instructs the broadcast server **110** to prepare an interactive application for broadcast and add it to the broadcast server's playlist. After scheduling, the event will need to be started by a start atomic command.

Started **1104,** Stopped **1106:** A start command from the translator module **502** transitions the state machine to the started state **1104.** The state machine emits a start broadcast primitive. After being started, the event can be started and stopped any number of times by start and stop atomic commands. The state machine transitions to stopped **1106** only for television shows and default events; the stopped **1106** state is not reached for commercial events.

In response to the start broadcast primitive, the broadcast server **110** can initiate the interactive application in various ways, including transmitting the interactive application if not previously transmitted, or if the application has been previously transmitted, transmitting a trigger to the interactive application to begin execution. Likewise, the broadcast server **110** may transmit other types of data, such as forms or content to the interactive application, or transmit a URL or the like, as previously described.

Process Secondary trigger **1108:** Also after being started, an event can have zero or more secondary triggers occur. A secondary trigger is an action that occurs while the event is active (i.e. is scheduled on the broadcast server). An example would be a 5-minute warning to the end user before the event ends. These triggers are created by the scheduling system **106** and passed to the translator module as a control signal.

Canceled **1110:** Finally, once the broadcast program associated with an event has ended, a cancel atomic command will be sent from the translator module **502.** The state machine responds by emitting a cancel broadcast primitive to the broadcast server **110,** which cancels the event. This state is reached differently for different events. For commercial events, this state is reached on when cancel atomic command is received from the translator module **502;** for television show events, the state is reached when the next television's state command is received; finally for default events, the state is reached on Shutdown.

In order for the start of a broadcast server event (interactive application) to be accurately synchronized with its associated scheduling system broadcast program, some scheduling systems' support pre-roll. Pre-roll is the amount of time a device that the scheduling system **106** is controlling (like a VTR) needs to complete an operation (like beginning to play a program). The scheduling system **106** can give the same kind of pre-roll warning to the automation server **108** giving it time to start an interactive application. Some scheduling systems support only one pro-roll value. If the automation server **108** response time is faster than that pre-roll value, then the automation server **108** introduces some additional delay in starting a broadcast server event. This fine-tuned timing is done in the event state machines by the system designer. The started, stopped, and canceled states can all introduce an amount of delay before actually starting, stopping, or canceling the broadcast server event.

While all broadcast server events share this same basic state machine, the event state machine is different for each event type. The details of these differences described below.

Secondary triggers are handled the same for all event types Secondary triggers are a way of extending the automation server **108.** Some scheduling systems **106** support more than the basic control signals (pre-load, pre-roll, on air, and off air). They can, for example, send a control signal 5 minutes before the end of a program to warn the device that the program is about to end. The automation server can use this signal to update the current interactive application to warn the viewer that it is about to end. This is just one example of how secondary triggers can be used.

### a) Commercial Event Type

This is the simplest event state machine. A commercial event is never stopped or restarted, so it just goes from scheduled, to started (potentially with some secondary triggers), and finally to canceled. The following table summarizes the state, the atomic command causing it to enter that state, and the actions performed by that state.

**Table 10: Event State Machine for Commercial Event Type**

| State | Atomic Command | State Behaviors |
|---|---|---|
| Scheduled **(1102)** | Schedule command | • Determine broadcast server event's parameters based on event type and interactive application location. |
| | | • Emit schedule broadcast primitive to schedule the event on the broadcast server. |
| Started | Start command | • Pause to account for pro-roll, if any. |
| **(1104)** | | • Emit start primitive to start the event on the broadcast server. |
| Stopped **(1106)** | N/A | • Never enter this state. |
| Canceled | Cancel command | • Pause to account for pro-roll, if any. |
| **(1110)** | | • Emit cancel primitive to cancel the event on the broadcast server. |

### b) Show Event Type

The show event state machine **512** is very similar to the commercial event state machine, but also must account for segmenting (described in Event Types section).

Unlike a commercial event, the cancel command only stops a show event since the show may need to be resumed sometime in the future. Only when the next show's start atomic command is received can this show be canceled. The following table summarizes the state, the atomic command causing it to enter that state, and the actions performed by that state.

**Table 11: Event State Machine for Show Event Type**

| State | Atomic Command | State Behaviors | |
|---|---|---|---|
| Scheduled **(1102)** | Schedule command | • If it is the first segment of a show, then: | |
| | | | **•** Determine broadcast server event's parameters based on event type and interactive application location |
| | | | • Schedule the event on the broadcast server. |
| | | **•** Else | |
| | | | • Do nothing. The event was already scheduled. |
| Started | Start command | • Pause to account for pre-roll, if any. | |
| **(1104)** | | • Start the event on the broadcast server. | |
| Stopped | Stop or Cancel • | Pause to account for pre-roll, if any. | |
| **(1106)** | command | • Stop the event on the broadcast server. | |
| Canceled | Next show's start | • Pause to account for pre-roll, if any. | |
| **(1110)** | command | • Cancel the event on the broadcast server. | |

### c) Default Event Types

There are three different types for default events: default show event, default commercial event, and default unknown event. Default events are used when there is no associated interactive application for that program ID.

Unlike a commercial event, the cancel command only stops a default event since it may need to be restarted sometime in the future. It is only canceled when the automation server **108** is shutdown. The primary difference between normal events and default events is that there are cases where two sequential program ID's can refer to the same default events. In this case it is preferred to not stop the default event and restart it immediately. Instead, the default event is allowed to continue playing. For this to work the "Stopped" state does not actually stop the event until it is certain that the next start atomic command is not also for this default event. Regardless of the default event type, the following table summarizes the state, the atomic command causing it to enter that state, and the actions performed by that state.

**Table 12: Event State Machine for Default Event Type**

| State | Atomic Command | State's Behaviors | |
|---|---|---|---|
| Scheduled **(1102)** | Schedule command | • Occurs when the automation server 108 is started up. | |
| Started | Start command | • If not already started, then: | |
| **(1104)** | | | • Pause to account for pro-roll, if any. |
| | | | • Start the event on the broadcast server. |
| Stopped **(1106)** | Stop or Cancel command | • Defer stopping until next start atomic command | |
| | | • On the next start atomic command: | |
| | | • If start is for same default event | |
| | | | • Leave the default event playing |
| | | | • Return to the Started state **1102** |
| | | • Else | |
| | | | • Pause to account for pro-roll, if any. |
| | | | • Stop the event on the broadcast server. |
| Canceled **(1110)** | None | • This only occurs when the automation server shutdown. | |

### 9. Segmentation

Fig. 12 illustrates how segmentation of television shows is handled to provide the viewer with a consistent experience, and maintain the appropriate interactive application during different segments of the television show, while likewise providing the appropriate interactive application during any commercials.

In Fig. 12 there is shown an event trace of the flow of control signals, atomic commands, and broadcast server commands from the scheduling system 106, (ideal) translator module **502,** and event manager **504** when handling a segmented television show. The television show, Show A is broadcast in two segments, A.1, and A.2, each of which has a unique program ID. In between the segments is commercial Ad X. After segment A.2 there is commercial Ad Y followed by a new show, Show B. The problem solved by the present invention here is that of maintaining the same interactivity during both segments A.1 and A.2 (even though the segments have unique program IDs), while providing whatever specific or default interactivity accompanies Ad X and Ad Y. To achieve this result, the program IDs for both segments A.1 and A.2 must be mapped by the event manager **504** to the same broadcast event (show A) in the event association table. This is done using the various procedures described above. The sequence of control signals and atomic commands is then as follows:

### Show Segment A.1

**1200:** First, the scheduling system **106** issues a pre-load A.1 signal.

**1202:** The translator module **502** in turn schedules segment A.1.

**1204:** The event manager **504** creates a new state machine **512** for this event (Show A), stores a mapping for this program ID and state machine in the event association table. The Show A state machine instructs the broadcast server **110** to schedule the appropriate interactive application for broadcast along with Show A.

**1206:** The scheduling system **106** then issues either pre-roll signal or a start signal for A.1.

**1208:** The translator module **502** in turn starts the segment A.1, potentially after some amount of delay determined by the amount pro-roll and the amount of time it takes the event manager **504** and broadcast server **110** to start the broadcast server event.

**1210:** The event manager Show A state machine correspondingly instructs the broadcast server to start the interactive application for Show A.

**1212:** Show A's interactive application is executed by the broadcast receiver **120** and appears on the display device, e.g., television set, coupled with the broadcast receiver **120**.

If the scheduling system **106** issued a pre-roll first, then the translator module **502** will ignore a subsequent start signal from the scheduling system **106** since the show A.1 is already started.

### Ad X

**1214:** After some time, the scheduling system **106** issues a pre-load signal for Ad X.

**1216:** The translator module **502** then issues schedule Ad X atomic command.

**1218:** The event manager issues a schedule command to the broadcast server **110** to schedule the interactive application (including default) for Ad X.

**1220:** The scheduling system **106** then issues a pre-roll or start Ad signal.

**1222, 1224:** Since the translator module **502** does not know that there is another segment to show A, it then transmits a cancel command for segment A.1, and then a start Ad X command. (If the scheduling system **106** sends a stop A.1, it will come after the pre-load and the pre-roll for Ad X, and for this reason it is ignored.)

**1226, 1228:** Normally, the event manager **504** would respond by canceling segment A.1. However, the event manager **504** temporarily ignores the cancel command, and instead issues a stop A. command to stop the interactive application for Show A, and then a start Ad X command, which begins execution of Ad X's interactive application.

**1230, 1232:** When these commands are received by the broadcast receiver, the receiver suspends execution of the interactive application for Show A, but does not terminate it, and begins execution of Ad X's interactive application (or the default application). Suspending the interactive application preserves whatever state information it had, such as points in a game, or the particular form that the viewer was viewing, and the like. Suspending has the further effect, for example, of removing Show A's interactive application from the display on the viewer's television set, so that the Show A interactive application is not displayed when Ad X is on screen, and Ad X's interactivity proceeds appropriately.

The event manager **504** defers the translator module's cancel command until it can determine that there is no other segment in Show A, which it does not know at this point in time. This will happen, subsequently, when Show B is started, as shown below.

### Show Segment A.2

**1234:** As Ad X is about to end, scheduling system **106** issues pre-load A.2 signal.

**1236:** The translator module **502** issues a schedule A.2 command.

At this point, the mapping logic **508** of the event manager **504** determines that the program ID for this event (segment A.2) correlates to the same interactive application as the program ID of segment A.1. Accordingly, the mapping logic **508** routes all commands for segment A.2 (according to their program ID) to the event state machine for Show A. Since the interactive application for this segment of Show A is already loaded at the broadcast receiver, there is no need to have the broadcast server pre-load it now. Thus, the event manager does not issue another schedule command.

**1238:** The scheduling system **106** then issues either a pre-roll A.2 or start A.2 signal.

**1240, 1242:** The translator module **502** sends a cancel command for Ad X and a start command for segment A.2.

**1244, 1246:** The event manager **504** first instructs the broadcast server to cancel the interactivity for Ad X and then routes the start command to the Show A state machine which instructs the broadcast server to start the interactive application associated with show A. Because the interactive application for Show A was only suspended previously, it now begins operating again (1248), with whatever state it had was prior to Ad X starting.

Thus, if Show A were a game show and its interactive application as a game application, then suspending the application for Ad X would have saved the viewer's point total (and other state) in the game, which is then restored when segment A.2 is broadcast and the application restarted.

### Ad Y

**1250:** At some later point, the scheduling system **106** issues a pro-load Ad Y signal.

**1252:** The translator module **502** sends schedule Y command to the event manager **504.**

**1254:** The event manager **504** schedules the interactivity for Ad Y on the broadcast server.

**1256:** The scheduling system **106** then issues a pre-roll Ad Y or start Ad Y signal.

**1258, 1260:** The translator module **502** sends a cancel command for segment A.2 and a start command for Ad Y.

**1262, 1264:** Again, the event manager **504** defers the cancel command, and instead instructs the broadcast server to stop the interactivity for show A and start the interactivity, if any (including default) for Ad Y. Show A's interactive application is suspended **(1266),** and the interactivity for Ad Y executes **(1268).**

Again, the state machine for Show A has deferred cancellation of segment A.2's interactive application since it does not yet know if there is another segment of show A.

### Show B

**1270:** As Ad Y is about to end, the scheduling system **106** issues a pre-load Show B signal.

**1272:** The translator module **502** schedules Show B.

**1274:** The mapping logic **508** of the event manager now determines that the program ID for Show B is different from Show A, and hence there are no further segments for Show A. A new state machine for Show B is instantiated. The event manager **504** then issues a schedule Show B to the broadcast server to schedule the interactivity for Show B. The event manager does not yet cancel the interactivity for Show A since Show B has not yet started.

**1276:** Then scheduling system **106** then issues either a pro-roll or a start Show B.

**1278, 1280:** The translator module **502** issues atomic commands to cancel Ad Y, start Show B.

**1282, 1284:** The event manager **504** first cancels Ad Y and then routes the start command to the new Show B state machine.

**1288:** When the start Show B command appears, the event manager **504** can safely cancel the interactivity for Show A, segment A.2 because it is clear that a new show is beginning. This cancel command does not come from the translator module502 directly, but is synthesized by the event manager's Show A state machine based on the start command for Show B. Since it is possible for Show B to be scheduled hours in advance of its broadcast, Show A's interactivity should not be cancelled until Show B actually starts. Also note that the cancellation can not occur when scheduling event B because of the potential for back-to-back shows and because Show B could be scheduled hours in advance of its starting time.

In some cases, there is no intervening commercial (e.g., Ad Y) between two television shows (e.g., Show A and Show B). That is, the two shows can be back-to-back (i.e. Show B can start right after Show A). In this case, Cancel Show A **1288** occurs before Start Show B **1284.**

In an alternative embodiment, the event manager **504** can start one interactive application before canceling another. For example this is desirable if canceling an interactive application takes more time than stopping then, it is an optimization to start the interactive application for Show B before canceling the interactive application for show A in cases where the two shows are not back-to-back. In general the, an alternative embodiment is to stop the previous interactive application, and start the next interactive application, and then cancel the previous one.

### E. Updating Dynamic Interactive Applications

As previously discussed above, the broadcast server**110** may transmit data that updates or modifies the features, user interface, or functionality of an interactive application. These updates include but are not limited to, updates to the information in the interactive application, text updates (e,g,. new sports scores, classified ads, news information, game questions, or answers, show guest lists), image updates (e.g., a new weather map), sound updates, and file updates.

In considering updating interactive applications, it is useful to segregate interactive applications into three classes:
1. Static application: this type of interactive application does not receive any updates during its execution.
2. Dynamic application - A dynamic application is an application that is updated with new information, typically, while it is executing. An example would be a sports ticker application that receives new sports scores throughout a football game; similarly a stock ticker interactive application would receive updated stock quotations. The source of data updates may vary and includes live data feeds, re-purposing web information, or statically defined updates transmitted at specific times (e.g. questions and answers in an interactive application accompanying a game show). The source of data updates can be at the national broadcaster generating national updates and/or at the local site generating local updates. As noted above, each dynamic application has a unique application identification code.
3. Re-authored dynamic application: This is an interactive application that is re-authored periodically to include new information, but re-uses the same application identification code and structurally stays the same; thus the updates constitute the new data each time the application is broadcast with its accompanying program. An example of such an interactive application is one that accompanies a variety television show, such as NBC's "Jay Leno Show." This application has the same look every night, but is updated each night to include that night's guests and other current information. The advantage to distinguishing this application type from a static application is that it is possible to store the interactive application persistently in the interactive application database **112,** with selected records or portions of the interactive application marked to indicate that they are to be updated when the application is transmitted. This is advantageous because it enables the broadcaster **114** to transmit only the updates, instead of the entire interactive application.

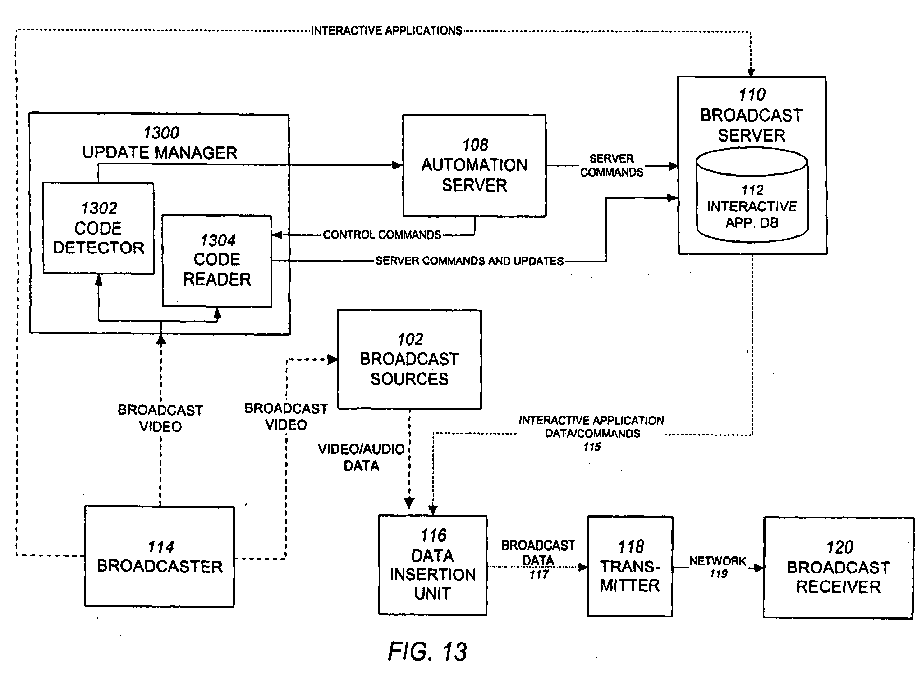

Referring now to Fig. 13, there is shown an embodiment of a system that provides updates to dynamic interactive applications. In addition to the various elements described with respect to Fig. 1, there is included in this implementation an update manager **1300.** The update manager **1300** includes two modules, an interactive content code detector **1302** and an interactive content code reader **1304.** Generally, the code detector **1302** identifies interactive application identification codes in a received signal and provides them to the automation server **108.** The automation server **108** tracks the state of the identified interactive application, and provides control signals to the code reader **1304.** The code reader **1304** is capable of reading the broadcast signal and identifying those portions (e.g. records) that are updates to corresponding records in an interactive application available in the broadcast server **110.** The automation server **108** provides commands to the code reader **1304** which instruct it to either send such updates to the broadcast server **110** for transmission to the reception devices, or to stop sending such updates. The broadcast server **110** then provides the updates to the DIU **116** for eventual transmission to the broadcast receiver **120.** These features allow the broadcast server **110** to update an interactive application, without relying on the application to be constructed in updated form by the broadcaster. The broadcast receiver **120** receives the updated records, and executes them along with the underlying interactive application.

More specifically, the code detector **1302** receives the incoming broadcast video signal from the broadcaster **114,** and detects various conditions related to the presence, absence, or change in the interactive application identification codes in the VBI portion of the signal (or in the corresponding portion of other data transports). The update manager **1300** initiates a new code detector **1302** for each channel; the automation server **108,** as noted above, also maintains a corresponding translator **502** for each channel, and a state machine **510** for each interactive application.

The code detector **1302** watches the VBI for records of an interactive application, and reads the application identification code in each record. On receiving a first application identification code, the code detector **1302** provides a New Identification Code signal to a corresponding translator **502** in the automation server **108.** Likewise, if the code detector **1302** detects a change in the application identification code, the code detector **1302** also emits the New Identification Code signal.

If the code detector **1302** detects a suspend or kill command, then the code detector **1302** emits a corresponding Suspend or Kill signal. If the code detector **1302** detects the absence of any application identification code, such as no interactive application records, then it initiates a timer. The timer has a user configurable expiration time; if no interactive application records are received before the time expires, then the code detector **1302** emits a No Data signal.

In another embodiment, the code detector **1302** also watches the broadcast signal for particular trigger signals. For example, trigger signals may be transmitted in preserved lines, such as the closed caption line, line 21. Line 21 trigger signals contain a content identifier, such as an interactive application identification code, and a duration count (e.g., 8 seconds), for controlling a countdown timer. For example a duration count of 30 would start a 30 second countdown timer. When the timer expired, the interactive application, or other content, is stopped. If a trigger signal is received, then interactive application records are ignored. Instead, the code detector **1302** looks for changes in the application identification code, here transmitted in the preserved lines. If the identification code changes, then a New Identification Code signal is sent to the translator **502**, and the timer is reset to count down from the duration count. If the timer expires, then a No Data command is sent to the translator.

Corresponding to each code detector **1302,** the automation server **108** maintains a translator **502** and an event manager **504.** The translator **502** receives the various signals from the code detector **1302.** On each Prepare and Start, the translator **502** initiates a new state machine **510** (since there is a new corresponding application), and transitions through it as described above. The event manager **504** likewise initiates an event manager **512** to receive the atomic commands **514** emitted by the corresponding translator state machine **510.**

Table 13 summarizes the relationships between the types of control signals provided by the code detector **1302** and the ideal signals in the translator **502**.

**Table 13**

| Ideal Signal | VBI Signal | Preserved Line Signal |
|---|---|---|
| Stop/Cancel previous event; Schedule, and Start new event | Change in application identification code (New Identification Code) | Change in application identification code (New Identification Code) |
| Stop or Cancel | Suspend/Kill command or No data detected for X seconds (No Data) | Expiration of countdown timer (No Data) |

As described above, the event manager **504** manages events (interactive applications) on the broadcast server **110,** in response to atomic commands from the translator **502,** using a state machine to track the state of each event. When the event manager **504** receives a Schedule command from the translator **502,** it instructs the broadcast server **110** to start and maintain a new event (interactive application) for broadcast; the broadcast server **110** returns an event ID to the event manager **504** for referencing this event. The event ID is a unique identifier of a particular instance of an interactive application being broadcast.

In yet another embodiment, the code detector **1302** directly incorporates the functionality of the translator, and maintains its own state machine for each interactive application it identifies. Accordingly, it directly maps the changes in the broadcast signal to atomic commands, and provides these atomic commands to the event manager **504.** This embodiment moves the functionality of the translator into the code detector **1302.**

In either embodiment, the event manager **504** includes some additional functionality for interacting with the code reader **1304.** More specifically, the event manager **504** provides two additional commands for controlling the code detector **1302** reader. First, when the event manager **504** receives a Start atomic command it transitions to its Started state **1104,** as previously discussed. Here, in addition to its other behaviors, it emits a Start_Updates command to the code reader **1304** for the channel, specifying the interactive application code, and the corresponding event ID provided by the broadcast server **110.** When the event manager receives a Stop atomic command, it transitions to the Stopped state **1106** and emits a Kill command to the code reader **1304,** providing the interactive identification code of the interactive application for which the updates are to be stopped.

The code reader **1304** is responsible for determining which records of an interactive application are updated, and providing those records to the broadcast server **110.** Like the other modules, the code reader **1304** is channel oriented, and maintains separate state on each channel, and each application on each channel. For each application, the code detector **1302** determines which records of the interactive application are updates, and forward these updates to the broadcast server **110.** Prior to receiving a Start_Updates command, the code reader **1304** caches the updated records. The code reader **1304** begins providing these updates in response to the Start_Updates command from the event manager **504.** The code reader **1304** provides an Update command to the broadcast server **110,** along with the interactive application identification, the event ID recognized by the broadcast server, and the updated record to be broadcast. The broadcast server **110** prepares the updated record(s) for broadcast by the DIU **116.** In response to a Kill command from the event manager **504,** the code reader **1304** stops transmitting updated records to the broadcast server **110.**

In some embodiments, the broadcast server **110** provides for transmission to the broadcast receivers a different interactive application for a given broadcast program than that which it receives encoded in the broadcast signal. The broadcast server **110** may modify, or replace the received interactive application with a different application. The different application may be a locally customized version of the originally received application, for example, providing locally relevant information (e.g business locations for a national vendor), or providing enhanced content, such as higher bandwidth applications (e.g. in MPEG or other digital formats).

In one embodiment in which digital applications are to be inserted into a broadcast digital video stream, the data insertion unit **116** has MPEG or other digital format insertion capabilities, as is known to those of ordinary skill in the art, for example, a MPEG 1 or 2 stream. The broadcast server **110** transmits the interactive content to a local subsystem multiplexer that is generating the MPEG stream. The local subsystem multiplexer typically has a serial or TCP/IP port to receive the interactive content bit stream. Upon receipt of the interactive content bit stream, the multiplexer adds the interactive content into an outgoing digital video stream in accordance with its normal operation. The multiplexer can also remove and replace interactive content when appropriate. If the digital stream is Serial Component Digital Video, (a packet-based digital video stream) as specified in the SMPTE 259MC standard, a Norpak encoder would be used to add the interactive content by replacing the existing packets with the new packets transmitted to it by the local broadcast server **110.** Alternatively, if a digital version of an interactive content has been broadcast to an analog subsystem **628,** the local interactive broadcast server **606** can swap out the digital application with a lower bandwidth analog application. If an analog version of an interactive content has been broadcast to the system **100,** the analog is first converted into a digital program or a digital program is swapped in place of the analog version. If the analog version is to be digitized, a software analog to digital converter is used to convert the analog version into a digital program that accords with the local subsystem's protocols. In one embodiment, the local broadcast server **110** supports multiple application delivery. For example, a cable headend subsystem may deliver both analog and digital streams to allow homes with digital broadcast receivers to receive higher quality interactivity while homes with analog broadcast receivers may still receive the simpler interactivity. In this embodiment, the local broadcast server **110** selects both the richer and simpler versions of the interactive content and inserts them into the respective signals.

In these embodiments then, the update manager **1300** enables the movement of updated records associated with an originally received interactive application to its customized local version which is being broadcast. This may entail a change in the transport layer, for example, from VBI line to MPEG, or the like, but allows such records to be integrated into the local application. As a result, the broadcast server **110** is able to provide updates to the local customized version of the application, even though the broadcaster did not originally create a broadcast signal that combined both the updates and the customized application.

To determine which records of an interactive application are updates, and which are static records, various methods may be used. A simple embodiment marks each record with a flag that indicates whether the record is a static record, or an update. (Records may be updated by a national broadcaster or in the local system.) The code reader **1304,** having read each record of the interactive application as its received, forwards records that are tagged as updates to the broadcast server **110.**

A more sophisticated embodiment includes a sequence number in each record. The records in the un-updated interactive application are initialized to 0. Each time a record is updated, its sequence number is incremented. The code reader **1304** maintains for each interactive application a table that lists each record of the interactive application and its sequence number (each record includes a record ID). As a record is received for an interactive application, the code reader **1304** compares the sequence number in its table, with the sequence number in the received record. If the received record's sequence ID is greater than the stored sequence number, then the code reader **1304** knows that this record is an update, and caches it or sends it to the broadcast server **110,** as appropriate. The code reader **1304** also updates the stored sequence number in the table.

This sequence numbering embodiment is particularly useful for re-authored dynamic applications, mentioned above, which use the same interactive identification code, but need different updates each time they are broadcast. The locally stored versions of these interactive applications contain all zero-valued sequence numbers. Each updated national version of the interactive application contains a sequence number of one for all dynamic records, that is those records to be updated. For example, if the application is to be broadcast nightly, then each night's updated records (e.g. a guest list) are sequence numbered with "1". Since the local broadcast server **110** reloads the local application each time it is broadcast it will have the 0 valued records each time. The code reader **1304** will therefore identify the updated sequence numbers on each new broadcast. This allows the national broadcaster to use the same interactive application each time, merely changing the dynamic records. This reduces the overhead required with providing updates each night, eliminating the need for the national broadcaster (or whomever is providing the interactive application) to deploy and track a different application every night with a distinct application identification code.

Record tagging and sequence numbering may also be used together. The interactive application can be locally configured to have only certain ones of its dynamic records tagged for updating. This is desirable, for example, if the local system operator wants to ignore certain updates provided by a national broadcaster. In this embodiment, the code reader **1304** will pass through only those records which are both marked for updating and have incremented sequence numbers.

As a further refinement of providing updates, it is desirable to ensure that an updated record, such as one provided by a nationally broadcast interactive application, is compatible with the record it is replacing in the local application. This is because replacement of one record type (e.g., text) with another record type (e.g., bitmap) may cause the interactive application to crash on the broadcast receiver, an unacceptable outcome. While type checking every record in the code reader **1304** is theoretically possible, in practice, due to the need to process the records at very high speeds, this is not a practical implementation.

Accordingly, one solution is to make use of dual checksums (signatures) on each interactive application.

The first checksum is computed on the structure of the updated records, but not on their variable content, that is, on the non-content portions of the updated records. For example, the checksum may be computed on the record Ids and record names for all of the updated records (alternatively, record type may be used as well, or some combination of these fields, e.g., ID and type). For example, the content of a record named Guest_List may change, but the name is constant across updates, as would be its type. This 'dynamic' checksum is transmitted along with the interactive application, and received by the code reader **1304** and compared with the corresponding dynamic checksum from the corresponding records of the local interactive application. If these match, then the code reader **1304** knows that the updated records are compatible with their corresponding locally stored records.

A second checksum is computed from all of the static (non-changing) portions of the interactive application, in both its national (or more generally, remote) version and its locally stored version. This static checksum is transmitted along with the interactive application and received by the code reader **1304,** and compared with the corresponding static checksum for the locally stored version of the same interactive application. If these checksums match, then the code reader **1304** knows that the static portions of the interactive application are identical, for example, the scripts, buttons, screen layouts, etc.

If either checksum match fails, then the code reader **1304** does not provide the updated records to the broadcast server **110.** Since only two checksum values are compared, this method is very fast, and requires no additional bandwidth by the code reader **1304.**

In addition to dynamic data updates, the update manager **1300** supports passing control information from a nationally (or otherwise remotely) broadcast interactive application to the local interactive application. These control signals include, but are not limited to, the following:
- Commands, like "exit interactive application" and "suspend interactive application." These provide yet another mechanism for controlling the operation of the interactive application.
- Information on the origin of the signal (for example which national broadcast server the signal came from).
- Application execution timing information. Such information (called "leases") can be used to control the specific time windows during which an application may be started, executed, or terminated. Further details of these features are discussed in co-pending application serial number 09/431,001.

Any or all of these signals can be passed on to the locally customized interactive application as required by the interactive television system.

### F. Summary

In summary then, the present invention provides various methods and means for controlling the behavior of interactive content in synchrony with the broadcast and display of broadcast programs, including television shows and commercials, and the like. The principles of the present invention, including using native control signals to determine the identity and state of broadcast programs and then to manage the states of interactivity associated with the broadcast programs can be implemented in a variety of different manners with numerous variations. Some of these variations within the scope of the invention are as follows:

The automation server **108** is described as using the dual state machines of the translator module **502** and the event manager **504.** Though beneficial, it is possible that other embodiments of the invention may implement the automation server **108** or its functionality without state machines, for example using programmed scripts for each type of control signal, or other procedural mechanisms.

The set of ideal control signals and states in the translator module **502,** atomic commands output to the event manager **504,** or the commands produced to control a broadcast server-like device may all be varied to cover more or fewer signals and commands. Likewise the specific actions in each of states may be varied. For example, in addition to commands to stop or cancel, a specific resume or resume with delay command may be used for more complex control. A save command may instruct the broadcast receiver 120 to save data generated in the interactivity for future retrieval. This command could be generated, for example, in response to error conditions, channel changes, or other events in order to save data that the user or the interactivity has created. A send or upload command may instruct the broadcast receiver to transmit data that has been created/stored back to a collection mechanism, for example to complete a purchase of a product via an interactive purchasing application.

The types of interactivity that can be controlled by the automation server 108 and the present invention may be varied, and are not limited to existing interactive applications. It is anticipated that interactivity such as web pages, or combinations of web pages and interactive applications may be controlled using the principles of the present invention.

The timing of when commands are sent to a broadcast server or similar device may be varied, depending on the bandwidth, connection speed for transmitting the data, and execution response time of the broadcast receiver relative to how quickly it can display a television image. Thus, the commands can be sent before the underlying broadcast event occurs, at the exact time thereof, just after, or substantially before. The timing of the commands can be optimized to take advantage of what information is known at the earliest available time.

The means by which the control signals are provided to the automation server or its equivalents may varied. These include as binary data over a serial port, LAN, or telecommunications interface to the scheduling system, or a binary data encoded into an analog or digital video signal.

Accordingly, the present invention is understood to be limited by the scope of the subsequent claims, and not inherently limited by the details of the preferred embodiments disclosed above.

## Claims

1. A computer implemented method of updating an interactive application broadcast from a broadcast system (114, 116) to a reception device (120) over a transmission medium (118), the method comprising:
receiving at the broadcast system a broadcast signal including at least one record of a first interactive application (115); **characterized by**
selecting a second interactive application (115), and broadcasting records of the second interactive application to the reception device (120) in place of at least some of the records of the first interactive application, for execution of the second interactive application by the reception device;
receiving at the broadcast system in the broadcast signal one or more additional records of the first interactive application; and
broadcasting from the broadcast system selected ones of the additional records to the reception device, for execution of the second interactive application in conjunction with the additional records.

2. The method of claim 1, wherein the second interactive application is a customized version of the first interactive application.

3. The method of claim 1, wherein the first interactive application is broadcast over a first transport protocol, and the second interactive application is broadcast over a second transport protocol.

4. The method of claim 1, wherein the first interactive application is broadcast over an analog transport protocol, and the second interactive application is broadcast over a digital transport protocol

5. The method of claim 4, wherein the analog transport protocol is the vertical blanking interval of an analog broadcast television signal.

6. The method of claim 4, wherein the digital transport protocol is an MPEG signal.

7. The method of claim 4, wherein the digital transport protocol is an ATVEF signal.

8. The method of claim 4, wherein the digital transport protocol is an HTTP signal.

9. The method of claim 4, wherein broadcasting the additional records to the reception device further comprises converting the updated records from a format compatible with the analog transport protocol to a format compatible with the digital transport protocol.

10. The method of claim 1, wherein broadcasting selected updated additional records to the reception device further comprises:
selecting an additional record that is an update of a corresponding record of the second interactive application.

11. The method of claim 10, wherein selecting an additional record that is an update of a corresponding record of the second interactive application further comprises:
storing for each record of the first interactive application a current sequence number;
determining whether a sequence number for a received additional record of the first interactive application exceeds the current sequence number for the record; and
responsive to the determination that the sequence number exceeds the stored sequence number, selecting the additional record, and adjusting the stored sequence number for the additional record to the received sequence number.

12. The method of claim 10, wherein selecting an additional record that is an update of a corresponding record of the second interactive application further comprises:
storing for each record of the first interactive application a current sequence number;
determining for each additional record of the first interactive application whether the record is an update by identifying an update flag;
for each additional record having an update flag, determining whether to utilize the additional record by determining whether a sequence number for a received additional record of the interactive application exceeds the current sequence number for the record; and
responsive to the determination that the sequence number exceeds the stored sequence number, adjusting the stored sequence number for the additional record to the received sequence number.

13. The method of claim 1, wherein broadcasting a selected additional record to the reception device further comprises:
broadcasting an updated additional record only if the additional record is compatible with a corresponding record in the second interactive application.

14. The method of claim 1, wherein broadcasting the selected additional records to the reception device further comprises:
determining whether the additional records are compatible with corresponding records of the second interactive application by:
matching a first checksum of the non-content portions of the additional records of the first interactive application with a first checksum on the non-content portions of the corresponding records containing variable content.

15. The method of claim 14, wherein the non-content portions of the records include at least one of the group consisting of:
record ID;
record type; and
record name.

16. The method of claim 14, wherein broadcasting the selected additional records to the reception device further comprises:
matching a second checksum of static portions of records of the first interactive application with a second checksum of static portions of records of the second interactive application.

17. The method of claim 1, further comprising:
receiving at the broadcast system in the broadcast signal, control information for controlling execution of the second interactive application at the reception device; and
broadcasting the control information to the reception device.

18. A system for updating an interactive application broadcast from a broadcast system (114, 116) to a reception device (120) over a transmission medium (118), the system **characterized by**:
a code detector (502, 1302) adapted to receive a broadcast signal and identify codes in the signal that relate to a change in a state (802, 804, 806, 808, 1102, 1104, 1106, 1108) of a first interactive application (115), and that provides output signals indicative of the change of state;
a server that maintains state information for the first interactive application in response to the output signals from the code detector, and in response to the state of the first interactive application, outputs commands to start or stop the output of updated records of the interactive application;
a code reader (1304), adapted to read interactive application codes of an interactive application and to identify records of the first interactive application that are updates of corresponding records of a second interactive application (115) stored in a broadcast server (110), and communicatively coupled to the server, that selectively provides the updated records to the broadcast server (110) in response to the commands from the server; and
a broadcast server (110) that broadcasts the second interactive application to reception devices for execution by the reception devices in place of the first interactive application, and selectively broadcasts the updated records to the reception devices, for execution of the second interactive application in conjunction with the updated records.

19. The system of claim 18, wherein the code detector identify codes that relates to a change in the state of an interactive application by detecting changes in an interactive application identification code.

20. The system of claim 18, wherein the code detector identifies codes that relate to a change in the state of an interactive application by detecting a new interactive application identification code.

21. The system of claim 20, wherein the server in response to an output signal of the code detector indicating a new interactive identification code, commands the code reader to start providing updated records of the broadcast server.

22. The system of claim 18, wherein the code detector identifies codes that relate to a change in the state of an interactive application by detecting an absence of an interactive application identification code in the broadcast signal for a predetermined amount of time.

23. The system of claim 22, wherein the server in response to an output signal of the code detector indicating an absence of the interactive identification code for the predetermined time, commands the code reader to stop providing updated records of the second interactive application to the broadcast server.

24. The system of claim 18, wherein the code reader caches updated records prior to receiving a command from the server to provide the updated records to the broadcast server.

25. The system of claim 18, wherein the code detector detects commands for controlling execution of the first interactive application in a preserved portion of the broadcast signal, and the code reader provides the commands to the broadcast server for broadcasting to the reception device.

26. The system of claim 18, further comprising means to perform the method steps according to anyone of claims 2 to 16.

27. A computer readable storage medium comprising instructions to cause a data-processing system to carry out all method steps of updating an interactive application broadcast according to one of claims 1 to 17.

## Patentansprüche

1. Computerimplementiertes Verfahren zum Aktualisieren einer interaktiven Anwendung, die über ein Übertragungsmedium (118) von einem Rundfunksystem (114, 116) an eine Empfangsvorrichtung (120) mittels Rundfunk übertragen wird; wobei das Verfahren umfaßt:
Empfangen eines 0Rundfunksignals, das zumindest eine Aufzeichnung einer ersten interaktiven Anwendung (115) enthält, an dem Rundfunksystem; **gekennzeichnet durch**
Auswählen einer zweiten interaktiven Anwendung (115) und Übertragen von Aufzeichnungen der zweiten interaktiven Anwendung an die Empfangsvorrichtung (120) anstelle zumindest einiger der Aufzeichnungen der ersten interaktiven Anwendung zur Ausführung der zweiten interaktiven Anwendung **durch** die Empfangsvorrichtung;
Empfangen von einer oder mehreren zusätzlichen Aufzeichnungen der ersten interaktiven Anwendung in dem Rundfunksignal an dem Rundfunksystem; und
Übertragen ausgewählter zusätzlicher Aufzeichnungen von dem Rundfunksystem an die Empfangsvorrichtung zur Ausführung der zweiten interaktiven Anwendung in Verbindung mit den zusätzlichen Aufzeichnungen.

2. Verfahren nach Anspruch 1; bei dem die zweite interaktive Anwendung eine individuell angepaßte Version der ersten interaktiven Anwendung ist.

3. Verfahren nach Anspruch 1, bei dem die erste interaktive Anwendung über ein erstes Transportprotokoll übertragen wird und die zweite interaktive Anwendung über ein zweites Transportprotokoll übertragen wird.

4. Verfahren nach Anspruch 1, bei dem die erste interaktive Anwendung über ein analoges Transportprotokoll übertragen wird und die zweite interaktive Anwendung über ein digitales Transportprotokoll übertragen wird.

5. Verfahren nach Anspruch 4, bei dem das analoge Transportprotokoll die vertikale Austastlücke eines analogen übertragenen Fernsehsignals ist.

6. Verfahren nach Anspruch 4, bei dem das digitale Transportprotokoll ein MPEG-Signal ist.

7. Verfahren nach Anspruch 4, bei dem das digitale Transportprotokoll ein ATVEF-Signal ist.

8. Verfahren nach Anspruch 4, bei dem das digitale Transportprotokoll ein HTTP-Signal ist.

9. Verfahren nach Anspruch 4, bei dem das Übertragen der zusätzlichen Aufzeichnungen an die Empfangsvorrichtung ferner das Umwandeln der aktualisierten Aufzeichnungen von einem mit dem anlogen Transportprotokoll kompatiblen Format zu einem mit dem digitalen Transportprotokoll kompatiblen Format umfaßt.

10. Verfahren nach Anspruch 1, bei dem das Übertragen von ausgewählten, aktualisierten, zusätzlichen Aufzeichnungen an die Empfangsvorrichtung ferner umfaßt:
Auswählen einer zusätzlichen Aufzeichnung, die eine Aktualisierung einer entsprechenden Aufzeichnung der zweiten interaktiven Anwendung ist.

11. Verfahren nach Anspruch 10, bei dem das Auswählen einer zusätzlichen Aufzeichnung, die eine Aktualisierung einer entsprechenden Aufzeichnung der zweiten interaktiven Anwendung ist, ferner umfaßt:
Speichern einer aktuellen Sequenznummer für jede Aufzeichnung der ersten interaktiven Anwendung;
Bestimmen, ob eine Sequenznummer für eine empfangene zusätzliche Aufzeichnung der ersten interaktiven Anwendung die aktuelle Sequenznummer für die Aufzeichnung übersteigt; und
Auswählen der zusätzlichen Aufzeichnung und Anpassen der gespeicherten Sequenznummer für die zusätzliche Aufzeichnung an die empfangene Sequenznummer abhängig von der Bestimmung, daß die Sequenznummer die gespeicherte Sequenznummer übersteigt.

12. Verfahren nach Anspruch 10, bei dem das Auswählen einer zusätzlichen Aufzeichnung, die eine Aktualisierung einer entsprechenden Aufzeichnung der zweiten interaktiven Anwendung ist, ferner umfaßt:
Speichern einer aktuellen Sequenznummer für jede Aufzeichnung der ersten interaktiven Anwendung;
für jede zusätzliche Aufzeichnung der ersten interaktiven Anwendung durch Identifizieren eines Update-Flags Bestimmen, ob die Aufzeichnung eine Aktualisierung ist;
für jede zusätzliche Aufzeichnung mit Update-Flag Bestimmen, ob die zusätzliche Aufzeichnung verwendet werden soll, durch Bestimmen, ob eine Sequenznummer für eine empfangene zusätzliche Aufzeichnung der interaktiven Anwendung die aktuelle Sequenznummer für die Aufzeichnung übersteigt; und
Anpassen der gespeicherten Sequenznummer für die zusätzliche Aufzeichnung an die empfangene Sequenznummer abhängig von der Bestimmung, daß die Sequenznummer die gespeicherte Sequenznummer übersteigt.

13. Verfahren nach Anspruch 1, bei dem das Übertragen einer ausgewählten zusätzlichen Aufzeichnung an die Empfangsvorrichtung ferner umfaßt:
Übertragen einer aktualisierten zusätzlichen Aufzeichnung nur dann, wenn die zusätzliche Aufzeichnung mit einer entsprechenden Aufzeichnung in der zweiten interaktiven Anwendung kompatibel ist.

14. Verfahren nach Anspruch 1, bei dem das Übertragen der ausgewählten zusätzlichen Aufzeichnungen an die Empfangsvorrichtung ferner umfaßt:
Bestimmen, ob die zusätzlichen Aufzeichnungen mit entsprechenden Aufzeichnungen der zweiten interaktiven Anwendung kompatibel sind, indem:
eine erste Prüfsumme der inhaltslosen Abschnitte der zusätzlichen Aufzeichnungen der ersten interaktiven Anwendung an eine erste Prüfsumme der inhaltslosen Abschnitte der entsprechenden Aufzeichnungen angepaßt wird, die einen variablen Inhalt haben.

15. Verfahren nach Anspruch 14, bei dem die inhaltslosen Abschnitte der Aufzeichnungen zumindest ein Element der Gruppe aus:
Aufzeichnungs- ID;
Aufzeichnungstyp; und
Aufzeichnungsname
enthalten.

16. Verfahren nach Anspruch 14, bei dem das Übertragen der ausgewählten zusätzlichen Aufzeichnungen an die Empfangsvorrichtung ferner umfaßt:
Anpassen einer zweiten Prüfsumme von statischen Abschnitten der Aufzeichnungen der ersten interaktiven Anwendung an eine zweite Prüfsumme der statischen Abschnitte der Aufzeichnungen der zweiten interaktiven Anwendung.

17. Verfahren nach Anspruch 1, ferner umfassend:
Empfangen von Steuerinformationen zum Steuern der Ausführung der zweiten interaktiven Anwendung an der Empfangsvorrichtung in dem Rundfunksignal an dem Rundfunksystem; und
Übertragen der Steuerinformationen an die Empfangsvorrichtung.

18. System zum Aktualisieren einer interaktiven Anwendung, die über ein Übertragungsmedium (118) von einem Rundfunksystem (114, 116) an eine Empfangsvorrichtung (120) mittels Rundfunk übertragen wird; wobei das System **gekennzeichnet ist durch**:
einen Codedetektor (502, 1302), der ausgebildet ist, ein Rundfunksignal zu empfangen und Codes in dem Signal zu identifizieren, die sich auf eine Änderung eines Zustands (802, 804, 806, 808, 1102, 1104, 1106, 1108) einer ersten interaktiven Anwendung (115) beziehen, und der Ausgangssignale bereitstellt, welche die Zustandsänderung angeben;
einen Server, der Zustandsinformationen für die erste interaktive Anwendung abhängig von den Ausgangssignalen von dem Codedetektor aufrechterhält und abhängig von dem Zustand der ersten interaktiven Anwendung Befehle ausgibt, um die Ausgabe aktualisierter Aufzeichnungen der interaktiven Anwendung zu beginnen oder zu beenden;
einen Codeleser (1304), der ausgebildet ist, interaktive Anwendungscodes einer interaktiven Anwendung zu lesen und Aufzeichnungen der ersten interaktiven Anwendung zu identifizieren, die Aktualisierungen entsprechender Aufzeichnungen einer zweiten interaktiven Anwendung (115) sind, die in einem Rundfunkserver (110) gespeichert sind, und der zur Übertragung mit dem Server verbunden ist und der wahlweise die aktualisierten Aufzeichnungen abhängig von den Befehlen von dem Server an den Rundfunkserver (110) liefert; und
einen Rundfunkserver (110), der anstelle der ersten interaktiven Anwendung die zweite interaktive Anwendung an Empfangseinrichtungen zur Ausführung **durch** die Empfangseinrichtungen überträgt und wahlweise die aktualisierten Aufzeichnungen zur Ausführung der zweiten interaktiven Anwendung in Verbindung mit den aktualisierten Aufzeichnungen an die Empfangsvorrichtungen überträgt.

19. System nach Anspruch 18, bei dem der Codedetektor durch Erfassen von Änderungen in einem interaktiven Anwendungsidentifikationscode Codes identifiziert, die sich auf eine Änderung des Zustands einer interaktiven Anwendung beziehen.

20. System nach Anspruch 18, bei dem der Codedetektor Codes identifiziert, die sich auf eine Änderung des Zustands einer interaktiven Anwendung beziehen, indem er einen neuen interaktiven Anwendungsidentifikationscode erfaßt.

21. System nach Anspruch 20, bei dem der Server abhängig von einem Ausgangssignal des Codedetektors, das einen neuen interaktiven Identifikationscode angibt, dem Codeleser befiehlt anzufangen, aktualisierte Aufzeichnungen des Rundfunkservers zu liefern.

22. System nach Anspruch 18, bei dem der Codedetektor durch Erfassen eines Nichtvorhandenseins eines interaktiven Anwendungsidentifikationscodes in dem Rundfunksignal für eine vorbestimmte Zeitdauer Codes identifiziert, die sich auf eine Änderung des Zustands einer interaktiven Anwendung beziehen.

23. System nach Anspruch 22, bei dem der Server abhängig von einem Ausgangssignal des Codedetektors, das ein Nichtvorhandensein des interaktiven Identifikationscodes für die vorbestimmte Zeit angibt, dem Codeleser befiehlt aufzuhören, aktualisierte Aufzeichnungen der zweiten interaktiven Anwendung an den Rundfunkserver zu liefern.

24. System nach Anspruch 18, bei dem der Codeleser aktualisierte Aufzeichnungen zwischenspeichert, bevor er einen Befehl von dem Server empfängt, die aktualisierten Aufzeichnungen an den Rundfunkserver zu liefern.

25. System nach Anspruch 18, bei dem der Codedetektor Befehle zum Steuern der Ausführung der ersten interaktiven Anwendung in einem geschützten Abschnitt des Rundfunksignals erfaßt, und der Codeleser die Befehle an den Rundfunkserver zum Übertragen an die Empfangsvorrichtung liefert.

26. System nach Anspruch 18, das ferner eine Einrichtung zum Ausführen der Verfahrensschritte nach einem der Ansprüche 2 bis 16 umfaßt.

27. Computerlesbares Speichermedium, welches Befehle enthält, die ein Datenverarbeitungssystem veranlassen, alle Verfahrensschritte zum Aktualisieren einer interaktiven Anwendung nach einem der Ansprüche 1 bis 17 auszuführen

## Revendications

1. Procédé mis en oeuvre par ordinateur de mise à jour d'une diffusion d'une application interactive depuis un système de diffusion (114, 116) vers un dispositif de réception (120) sur un milieu de transmission (118), ce procédé comprenant :
recevoir au niveau du système de diffusion un signal de diffusion indiquant au moins un enregistrement d'un première application interactive (115) ;
**caractérisé par** :
sélectionner une seconde application interactive (115) et diffuser des enregistrements de la seconde application interactive vers le dispositif de réception (120) au lieu d'au moins certains des enregistrements de la première application interactive, pour exécution de la seconde application interactive par le dispositif de réception ;
recevoir au niveau du système de diffusion dans le signal de diffusion un ou plusieurs enregistrements de la première application interactive ; et
diffuser à partir du système de diffusion certains sélectionnés des enregistrements supplémentaires vers le dispositif de réception pour exécution de la seconde application interactive en relation avec les enregistrements supplémentaires.

2. Procédé selon la revendication 1, dans lequel la seconde application interactive est une version adaptée de la première application interactive.

3. Procédé selon la revendication 1, dans lequel la première application interactive est diffusée selon un premier protocole de transport et la seconde application interactive est diffusée selon un second protocole de transport.

4. Procédé selon la revendication 1, dans lequel la première application interactive est diffusée selon un protocole de transport analogique et la seconde application interactive est diffusée selon un protocole de transport numérique.

5. Procédé selon la revendication 4, dans lequel le protocole de transport analogique est l'intervalle d'effacement vertical d'un signal de télévision analogique diffusé.

6. Procédé selon la revendication 4, dans lequel le protocole de transport numérique est un signal MPEG.

7. Procédé selon la revendication 4, dans lequel le protocole de transport numérique est un signal ATVEF.

8. Procédé selon la revendication 4, dans lequel le protocole de transport numérique est un signal HTTP.

9. Procédé selon la revendication 4, dans lequel, des enregistrements supplémentaires vers le dispositif de réception comprend en outre la conversion des enregistrements mis à jour d'un format compatible avec le protocole de transport analogique en un format compatible avec le protocole de transport numérique.

10. Procédé selon la revendication 1, dans lequel la diffusion d'enregistrements supplémentaires mis à jour sélectionnés vers le dispositif de réception comprend en outre la sélection d'un enregistrement supplémentaire qui est une mise à jour d'un enregistrement correspondant de la seconde application interactive.

11. Procédé selon la revendication 10, dans lequel la sélection d'un enregistrement supplémentaire qui est une mise à jour d'un enregistrement correspondant de la seconde application interactive comprend en outre :
mémoriser pour chaque enregistrement de la première application interactive un numéro de séquence courant ;
déterminer si un numéro de séquence pour un enregistrement supplémentaire reçu de la première application interactive dépasse le numéro de séquence courant pour l'enregistrement ; et
en réponse à la détermination du fait que le numéro de séquence dépasse le numéro de séquence mémorisé, sélectionner l'enregistrement supplémentaire et régler le numéro de séquence mémorisé pour l'enregistrement supplémentaire sur le numéro de séquence reçu.

12. Procédé selon la revendication 10, dans lequel la sélection d'un enregistrement supplémentaire qui est une mise à jour d'un enregistrement correspondant de la seconde application interactive comprend en outre :
mémoriser pour chaque enregistrement de la première application interactive un numéro de séquence courant ;
déterminer pour chaque enregistrement supplémentaire de la première application interactive si l'enregistrement est une mise à jour en identifiant un drapeau de mise à jour ;
pour chaque enregistrement supplémentaire ayant un drapeau de mise à jour, déterminer s'il faut utiliser l'enregistrement supplémentaire en déterminant si un numéro de séquence pour un enregistrement supplémentaire reçu de l'application interactive dépasse le numéro de séquence courant pour l'enregistrement ; et
en réponse à la détermination du fait que le numéro de séquence dépasse le numéro de séquence mémorisé, régler le numéro de séquence mémorisé pour l'enregistrement supplémentaire sur le numéro de séquence reçu.

13. Procédé selon la revendication 1, dans lequel la diffusion d'un enregistrement supplémentaire sélectionné vers le dispositif de réception comprend en outre la diffusion d'un enregistrement supplémentaire seulement si l'enregistrement supplémentaire est compatible avec un enregistrement correspondant dans la seconde application interactive.

14. Procédé selon la revendication 1, dans lequel la diffusion des enregistrements supplémentaires sélectionnés vers le dispositif de réception comprend en outre :
déterminer si les enregistrements supplémentaires sont compatibles avec les enregistrements correspondants de la seconde application interactive en faisant correspondre une première somme de vérification des parties non de contenu des enregistrements supplémentaires de la première application interactive avec une première somme de vérification des parties non de contenu des enregistrements correspondants contenant un contenu variable.

15. Procédé selon la revendication 14, dans lequel les parties non de contenu des enregistrements comprennent au moins l'un du groupe comprenant :
ID d'enregistrement ;
type d'enregistrement ; et
nom d'enregistrement.

16. Procédé selon la revendication 14, dans lequel la diffusion des enregistrements supplémentaires sélectionnés vers le dispositif de réception comprend en outre :
faire concorder une seconde somme de vérification de parties statiques des enregistrements de la première application interactive avec une seconde somme de vérification de parties statiques des enregistrements de la seconde application interactive.

17. Procédé selon la revendication 1, comprenant en outre :
recevoir au niveau du système de diffusion dans le signal de diffusion, des informations de commande pour commander l'exécution de la seconde application interactive au niveau du dispositif de réception ; et
diffuser les informations de commande vers le dispositif de réception.

18. Système de mise à jour d'une diffusion d'application interactive à partir d'un système de diffusion (114, 116) vers un dispositif de réception (120) sur un milieu de transmission (118), le système étant **caractérisé par** :
un détecteur de code (502, 1302) adapté à recevoir un signal de diffusion et à identifier des codes dans le signal qui concernent un changement d'état (802, 804, 806, 808, 1102, 1104, 1106, 1108) d'une première application interactive (115), et qui fournit des signaux de sortie indicatifs du changement d'état ;
un serveur qui maintient des informations d'état pour la première application interactive en réponse aux signaux de sortie du détecteur de code et, en réponse à l'état de la première application interactive, fournit des ordres pour faire démarrer ou arrêter la sortie d'enregistrements mis à jour de l'application interactive ;
un lecteur de code (1304) adapté à lire des codes d'application interactive d'une application interactive et à identifier des enregistrements de la première application interactive qui sont des mises à jour d'enregistrements correspondants d'une seconde application interactive (115) mémorisés dans un serveur de diffusion (110), et couplé pour communiquer avec le serveur, qui fournit sélectivement les enregistrements mis à jour au serveur de diffusion (110) en réponse aux ordres du serveur ; et
un serveur de diffusion (110) qui diffuse la seconde application interactive vers des dispositifs de réception pour exécution par les dispositifs de réception au lieu de la première application interactive, et diffuse sélectivement les enregistrements mis à jour vers des dispositifs de réception pour exécution de la seconde application interactive en relation avec les enregistrements mis à jour.

19. Système selon la revendication 18, dans lequel le détecteur de code identifie des codes qui concernent un changement d'état d'une application interactive en détectant des changements dans un code d'identification d'application interactive.

20. Système selon la revendication 18, dans lequel le détecteur de code identifie des codes qui concernent un changement d'état d'une application interactive en détectant un nouveau code d'identification d'application interactive.

21. système selon la revendication 20, dans lequel le serveur, en réponse à un signal de sortie du détecteur de code indiquant un nouveau code d'identification interactif, commande le lecteur de code pour commencer à fournir les enregistrements mis à jour du serveur de diffusion.

22. Système selon la revendication 18, dans lequel le détecteur de code identifie des codes qui concernent un changement d'état d'une application interactive en détectant une absence de code d'identification d'application interactive dans le signal de diffusion pendant une durée prédéterminée.

23. Système selon la revendication 22, dans lequel le serveur, en réponse à un signal de sortie du détecteur de code indiquant une absence de code d'identification interactif pendant la durée prédéterminée, commande le lecteur de code pour qu'il arrête de fournir des enregistrements mis à jour de la seconde application interactive vers le serveur de diffusion.

24. Système selon la revendication 18, dans lequel le lecteur de code met en cache des enregistrements mis à jour avant de recevoir une commande du serveur pour fournir les enregistrements mis à jour au serveur de diffusion.

25. Système selon la revendication 18, dans lequel le détecteur de code détecte des commandes destinées à commander l'exécution de la première application interactive dans une partie préservée du signal de diffusion, et le lecteur de code fournit des commandes au serveur de diffusion pour diffusion vers le dispositif de réception.

26. Système selon la revendication 18, comprenant des moyens pour mettre en oeuvre les étapes de procédé de l'une quelconque des revendications 2 à 16.

27. Milieu d'enregistrement lisible par ordinateur comprenant des instructions entraînant un système de traitement de données á effectuer toutes les étapes de procédé de mise à jour d'une diffusion d'une application interactive selon l'une des revendications 1 à 17.
